# FASCICULE DE BREVET EUROPEEN

(11) **EP 1 362 161 B1**
(45) Date de publication et mention de la délivrance du brevet: **20.04.2005**
(21) Numéro de dépôt: 02706866.7
(22) Date de dépôt: 18.02.2002
(51) Int. Cl.: E21B 43/01, E21B 17/01, F16L 1/26

(54) **INSTALLATION DE LIAISON FOND-SURFACE D'UNE CONDUITE SOUS-MARINE INSTALLEE A GRANDE PROFONDEUR**
VORRICHTUNG ZUR BILDUNG EINER VERBINDUNG ZWISCHEN MEERESGRUND UND OBERFLÄCHE, EINER IN GROSSER TIEFE INSTALLIERTEN UNTERWASSERLEITUNG
SEAFLOOR-SURFACE CONNECTING INSTALLATION OF A SUBMARINE PIPELINE INSTALLED AT GREAT DEPTH

(30) Priorité: 19.02.2001 FR 2200006
(43) Date de publication de la demande: 19.11.2003
(73) Titulaire: Saipem SA, 78180 Montigny-le-Bretonneux (FR)
(72) Inventeur: CHENIN, Laurent, F-78320 Le Mesnil Saint Denis (FR)
(74) Mandataire: Domange, Maxime
(86) Numéro de dépôt international: PCT/FR2002/000608
(87) Numéro de publication internationale: WO 2002/066786

(56) Documents cités:
- WO-A-00/49267
- FR-A- 2 396 154
- FR-A- 2 600 709
- FR-A- 2 768 457
- FR-A- 2 809 136
- US-A- 4 031 919

## Description

La présente invention a pour objet une installation de liaison fond-surface d'au moins une conduite sous-marine installée à grande profondeur du type tour-hybride.

Le secteur technique de l'invention est le domaine de la fabrication et de l'installation de colonnes montantes de production pour l'extraction sous-marine de pétrole, de gaz ou autre matériau soluble ou fusible ou d'une suspension de matière minérale à partir de tête de puits immergé pour le développement de champs de production installés en pleine mer au large des côtes. L'application principale et immédiate de l'invention étant dans le domaine de la production pétrolière.

Un support flottant comporte en général des moyens d'ancrage pour rester en position malgré les effets des courants, des vents et de la houle. II comporte aussi en général des moyens de stockage et de traitement du pétrole ainsi que des moyens de déchargement vers des pétroliers enleveurs, ces derniers se présentant à intervalle régulier pour effectuer l'enlèvement de la production. L'appellation de ces supports flottants est le terme anglo-saxon "Floating Production Storage Offloading" (signifiant "moyen flottant de stockage, de production et de déchargement") dont on utilisera le terme abrégé "FPSO" dans l'ensemble de la description suivante.

En raison de la multiplicité des lignes existant sur ce type d'installation, on a été amené à mettre en oeuvre des liaisons fond-surface de type tour-hybride dans lesquelles des conduites rigides sensiblement verticales appelées ici "riser vertical", assurent la liaison entre les conduites sous-marines reposant au fond de la mer et remontent le long d'une tour jusqu'à une profondeur proche de la surface, profondeur à partir de laquelle des conduites flexibles assurent la liaison entre le sommet de la tour et le support flottant. La tour est alors munie de moyens de flottabilité pour rester en position verticale et les risers sont reliés, en pied de tour, aux conduites sous-marines par des manchettes souples qui absorbent les mouvements angulaires de la tour. L'ensemble est communément appelé "Tour Hybride", car il fait intervenir deux technologies, d'une part une partie verticale, la tour, dans laquelle le riser est constitué de conduites rigides, d'autre part la partie haute du riser constituée de flexibles en chaînette qui assurent la liaison au support flottant.

On connaît le brevet français FR 2 507 672 publié le 17 Décembre 1982 et intitulé "colonne montante pour les grandes profondeurs d'eau", qui décrit une telle tour hybride.

La présente invention concerne plus particulièrement le domaine connu des liaisons de type comportant une tour hybride verticale ancrée sur le fond et composée d'un flotteur situé au sommet d'un riser vertical, celui-ci étant relié par une conduite, notamment une conduite flexible prenant par son propre poids la forme d'une chaînette depuis le sommet du riser, jusqu'à un support flottant installé en surface.

L'intérêt d'une telle tour hybride réside dans la possibilité pour le support flottant de pouvoir s'écarter de sa position normale en induisant un minimum de contraintes dans la tour ainsi que dans les portions de conduites en forme de chaînettes en suspension, tant au fond qu'en surface.

On connaît le brevet au nom de la présente demanderesse, WO 00/49267 qui décrit une tour dont le flotteur se trouve à une profondeur supérieure à la demi-hauteur d'eau et dont la liaison caténaire vers le navire de surface est réalisée à l'aide de conduites rigides de forte épaisseur. La tour ainsi décrite, nécessite au niveau de son embase, des manchettes de liaison souple permettant de raccorder l'extrémité inférieure des risers verticaux de ladite tour à la conduite sous-marine reposant sur le fond, de manière à absorber les mouvements résultant des dilatations dus à la température du fluide transporté.

Plus particulièrement, dans WO 00/49267, le système d'ancrage comporte un tendon vertical constitué soit d'un câble, soit d'une barre métallique, soit encore d'une conduite tendue à son extrémité supérieure par un flotteur. L'extrémité inférieure du tendon est fixée à une embase reposant au fond. Ledit tendon comporte des moyens de guidage répartis sur toute sa longueur à travers lesquels passent lesdits risers verticaux. Ladite embase peut être posée simplement sur le fond de la mer et rester en place par son propre poids, ou rester ancrée au moyen de piles ou tout autre dispositif propre à la maintenir en place. Dans WO 00/49267, l'extrémité inférieure du riser vertical est apte à être connectée à l'extrémité d'une manchette coudée, mobile, entre une position haute et une position basse, par rapport à ladite embase, à laquelle cette manchette est suspendue et associée à un moyen de rappel la ramenant en position haute en l'absence du riser. Cette mobilité de la manchette coudée permet d'absorber les variations de longueur du riser sous les effets de la température et de la pression. En tête du riser vertical, un dispositif de butée, solidaire de celui-ci, vient s'appuyer sur le guide support installé en tête du flotteur et maintient ainsi la totalité du riser en suspension.

De plus, le pétrole brut cheminant sur de très grandes distances, plusieurs kilomètres, on cherche à leur fournir un niveau d'isolation extrême pour, d'une part minimiser l'augmentation de viscosité qui conduirait à une réduction de la production horaire des puits, et d'autre part d'éviter le blocage du flot par dépôt de paraffine, ou formation d'hydrates dès lors que la température descend aux alentours de 30-40°C. Ces derniers phénomènes sont d'autant plus critiques, particulièrement en Afrique de l'Ouest, que la température du fond de la mer est de l'ordre de 4°C et que les pétroles bruts sont de type paraffiniques.

On connaît de nombreux systèmes d'isolation thermique qui permettent d'atteindre le niveau de performances requis et de résister à la pression du fond de la mer qui est de l'ordre de 150 bars à 1500m de profondeur. On cite entre autres les concepts de type "pipe-in-pipe", comprenant une conduite véhiculant le fluide chaud installée dans une conduite de protection externe, l'espace entre les deux conduites étant, soit simplement rempli d'un calorifuge, confiné ou non sous vide, soit simplement tiré au vide. De nombreux autres matériaux ont été développés pour assurer une isolation à hautes performances, certains d'entre eux étant résistants à la pression, entourent simplement la conduite chaude et sont en général confinés au sein d'une enveloppe extérieure souple ou rigide, en équipression et dont la fonction principale est de maintenir dans le temps une géométrie sensiblement constante.

Tous ces dispositifs véhiculant un fluide chaud au sein d'une conduite isolé présentent, à des degrés divers, des phénomènes de dilatation différentielle. En effet la conduite interne, en général en acier, se trouve à une température que l'on cherche à maintenir le plus élevé possible, par exemple 60 ou 80°C, alors que l'enveloppe externe, bien souvent elle aussi en acier, se trouve à la température de l'eau de mer, c'est à dire aux alentours de 4°C. Les efforts engendrés sur les éléments de liaison entre conduite interne et enveloppe externe sont considérables et peuvent atteindre plusieurs dizaines, voire plusieurs centaines de tonnes et l'élongation globale résultante est de l'ordre de 1 à 2 m dans le cas de conduites isolées de 1000 à 1200m de longueur.

Le problème posé selon la présente invention est de pouvoir réaliser et installer de telles liaisons fond-surface pour conduites sous-marines à grandes profondeurs, telles qu'au delà de 1 000 mètres par exemple, et de type comportant une tour verticale et dont le fluide transporté doit être maintenu au dessus d'une température minimale jusqu'à son arrivée en surface, en réduisant au minimum les composants sujets à déperdition thermique, en évitant les inconvénients créés par l'expansion thermique propre, ou différentielle, des divers composants de ladite tour, de manière à résister aux contraintes extrêmes et aux phénomènes de fatigue cumulée sur la durée de vie de l'ouvrage, qui dépasse couramment 20 années.

Un autre problème de la présente invention est de fournir une installation de liaison fond-surface du type tour-hybride dont le système d'ancrage soit d'une grande résistance et d'un faible coût, et dont le procédé de mise en place des différents éléments constitutifs soit simplifié et également d'un faible coût.

Un autre problème à la base de l'invention est de fournir une installation qui permette d'intervenir à l'intérieur de la conduite sous-marine reposant au fond de la mer, par un procédé de type "coil-tubing" depuis la surface et à partir de l'extrémité supérieure du riser vertical.

Une solution aux problèmes posés est donc une installation de liaison fond-surface pour conduite sous-marine reposant au fond de la mer, notamment à grande profondeur, comprenant :
a) au moins un riser vertical relié à son extrémité inférieure à au moins une conduite sous-marine reposant au fond de la mer, et à son extrémité supérieure à au moins un flotteur, et
b) au moins une conduite de liaison, de préférence une conduite flexible, assurant la liaison entre un support flottant et l'extrémité supérieure dudit riser vertical, et
c) la liaison entre l'extrémité inférieure dudit riser vertical et une dite conduite sous-marine reposant au fond de la mer se fait par l'intermédiaire d'un système d'ancrage comprenant une embase posée sur le fond et restant en place notamment par son propre poids, ou au moyen d'ancres à succion,
caractérisée en ce que :
1- ledit riser vertical comprend à son extrémité inférieure une portion de conduite terminale, de préférence renforcée, reliée à la partie supérieure dudit riser vertical par un joint flexible lequel autorise des mouvements angulaires (α) de ladite partie supérieure par rapport à ladite portion de conduite terminale ;
2- la partie terminale de ladite conduite reposant au fond de la mer présente une courbure terminale en forme de coude, de préférence avec un grand rayon de courbure ;
3- l'extrémité inférieure de ladite portion terminale du riser vertical est reliée à l'extrémité supérieure de ladite courbure terminale en forme de coude de la conduite sous-marine reposant au fond, par un unique élément de raccordement entre ledit riser vertical et ladite conduite sous-marine reposant au fond, de préférence un connecteur automatique ; et
4- ladite embase maintient rigidement en position verticale fixe et reliées l'une à l'autre par l'intermédiaire dudit élément de raccordement:
   ■ d'une part, ladite portion de conduite terminale dudit riser vertical et,
   ■ d'autre part, ladite courbure terminale en forme de coude de ladite conduite sous-marine reposant au fond, celle-ci étant tournée vers le haut.

L'installation selon la présente invention est avantageuse car elle présente une géométrie statique de la partie basse de la tour, et se trouve ainsi parfaitement stabilisée et ne supporte plus aucun mouvement et/ou effort, notamment au niveau du raccordement entre le riser vertical et la conduite reposant au fond de la mer.

Un autre avantage de la présente invention est aussi la réduction considérable du coût global, résultant de la suppression des manchettes utilisées dans la technique antérieure pour relier le riser vertical et la conduite reposant au niveau de la mer. En effet, une telle manchette, selon la technique antérieure, est complexe à fabriquer et installer, car elle est installée après dépose sur le sol de l'extrémité de la conduite reposant sur le fond de la mer et après installation de l'embase, lesquelles se font dans une zone cible représentant respectivement chacune, en général, un cercle d'environ 5 à 10 m de diamètre, soit avec une incertitude considérable quant à leur position relative. Une métrologie de la position et de l'orientation relatives des extrémités des lignes doit donc être effectuée à l'aide d'un ROV (nom abrégé du terme anglo-saxon "Remote Operated Vehicule" signifiant "sous-marin automatique, télécommandé depuis la surface"). La manchette est alors réalisée, soit à terre, soit à bord du navire d'installation, puis mise en place grâce à un ROV. De plus, une telle manchette nécessite des moyens de connexions, en général deux connecteurs automatiques, un à chaque extrémité de la manchette, entre le riser vertical et la conduite reposant au fond de la mer. Il faut préciser enfin que l'isolation thermique efficace d'une telle manchette coudée équipée de ses connecteurs automatiques, utilisée dans la technique antérieure, est extrêmement compliquée à réaliser, et donc très coûteuse, ce qui augmente donc considérablement le coût et la complexité de l'installation dans le cas où l'on met en oeuvre des conduites dont on recherche une isolation extrême.

Enfin, du fait que les extrémités de conduite reposant sur le fond sont déposées dans des zones cibles et éloignées de la base de la tour, il est nécessaire d'installer des manchettes préfabriquées présentant une succession de parties droites et de coudes d'angles variables pour relier l'extrémité de la conduite reposant au fond à la base de la tour, ce qui engendre, de par la poussée et le mouvement créés par la dilatation de la conduite reposant sur le fond, des efforts considérables au sein desdites manchettes, engendrant principalement des contraintes de flexions dues à l'existence même desdits coudes.

L'installation selon l'invention permet d'éliminer tous ces inconvénients de l'art antérieur et de fournir au meilleur coût, une tour riser intégrant les technologies d'isolation les plus performantes.

Dans WO 00/49267, la tour comprenant plusieurs risers est tendue par un tendon central qui maintient en suspension une pluralité de risers verticaux, et le sommet du tendon tendu par un flotteur constitue un point de référence sensiblement fixe en altitude, à la variation près du poids global apparent des risers et de leur contenu ; et l'intégralité du mouvement était donc absorbée par les manchettes coudées de raccordement en partie basse, pièces coûteuses et difficiles à réaliser et à installer. Selon la présente invention, le point sensiblement fixe en altitude se trouve en bas de la tour au niveau du joint flexible, ce qui permet de supprimer les manchettes coudées de raccordement, les mouvements différentiels entre les risers étant absorbés par les différents flotteurs qui sont libres de se déplacer verticalement au sommet de chacun desdits risers.

Dans un mode de réalisation avantageux, ladite embase comprend:
a) une structure inférieure posée sur le fond qui maintient en position verticale tournés vers le haut, ladite courbure terminale en forme de coude de ladite conduite reposant au fond et une première partie d'un dit élément de raccordement à l'extrémité de ladite courbure, et
b) une structure supérieure qui assure le guidage de ladite portion terminale dudit riser vertical et qui la maintient en position verticale et qui coopère avec ladite structure inférieure, de sorte que ladite structure supérieure se pose par-dessus ladite structure inférieure de manière:
   - à guider une deuxième partie dudit élément de raccordement située à l'extrémité inférieure de ladite portion terminale dudit riser vertical en regard de ladite première partie complémentaire de ladite deuxième partie dudit élément de raccordement, et
   - stabiliser ladite structure inférieure posée sur le fond, de par le poids de ladite structure supérieure, et éventuellement, en coopération avec des ancres à succion.

Ce mode de réalisation décrit ci-dessus permet en effet de rendre plus aisé le raccordement du riser vertical et de la conduite sous-marine reposant au sol lors de la mise en place de l'installation.

De préférence, ladite structure inférieure est rendue solidaire de ladite structure supérieure par un système de coins, ce qui évite un enfoncement éventuel de ladite structure inférieure dans le fond de la mer.

Plus particulièrement, ladite structure supérieure comprend:
- une structure principale et des éléments de stabilisation qui coopèrent avec ladite structure principale pour la stabiliser au sol ;
- ladite structure principale comprenant :
   ■ une structure centrale en élévation comprenant :
      - une cavité intérieure ouverte à sa base et présentant une forme complémentaire à la forme externe de ladite structure inférieure de sorte que ladite structure centrale coiffe ladite structure inférieure, et
      - un orifice supérieur traversé par ladite portion terminale dudit riser vertical, celui-ci étant bloqué dans ledit orifice par un deuxième système de coins, ledit orifice communiquant avec ladite cavité intérieure, et
   ■ une plateforme inférieure horizontale périphérique à la base de ladite structure centrale avec laquelle lesdits éléments de stabilisation coopèrent, notamment sur laquelle viennent se poser des corps-morts, ou à travers laquelle sont enfoncées dans le sol des ancres à succion.

La présente invention est particulièrement avantageuse lorsque l'installation comprend :
- au moins deux dits risers verticaux sensiblement parallèles et rapprochés, chacun étant relié à son extrémité supérieure à au moins un flotteur et,
- ladite embase maintenant en position verticale fixe et reliées les unes aux autres par l'intermédiaire desdists éléments de raccordement:
   ■ d'une part, deux dites portions de conduite terminale desdits risers verticaux et,
   ■ d'autre part, respectivement deux dites courbures terminales en forme de coude de deux dites conduites sous-marines reposant au fond, celles-ci étant tournées vers le haut.

Dans ce mode de réalisation avec plusieurs risers, ladite embase comprend :
- au moins deux dites structures inférieures posées sur le fond, chacune maintenant en position verticale tournée vers le haut une dite courbure terminale d'une dite conduite sous-marine reposant au fond de la mer et une dite première partie d'un dit élément de raccordement à l'extrémité de ladite courbure et,
- une dite structure supérieure qui assure le guidage des deux dites portions terminales desdits risers verticaux et les maintient en position verticale et qui coopère avec les deux dites structures inférieures, de sorte que ladite structure supérieure se pose par-dessus au moins deux dites structures inférieures côte à côte de manière à guider une dite deuxième partie dudit élément de raccordement située à l'extrémité inférieure de ladite portion terminale de chacun desdits risers verticaux, en regard de ladite première partie dudit élément de raccordement à l'extrémité de ladite courbure de chacune desdites conduites reposant au fond de la mer et stabiliser lesdites structures inférieures posées sur le fond, de par le poids de ladite structure supérieure, et éventuellement en coopérant avec des ancres à succion.

Dans un mode de réalisation particulier, ladite structure supérieure comprend une structure principale comprenant au moins deux cavités intérieures chacune de forme complémentaire à la forme externe d'une dite structure inférieure et coiffant celle-ci, et au moins deux dits orifices supérieurs communiquant chacun avec une dite cavité intérieure, chacun desdits orifices supérieurs étant traversé par une dite portion terminale desdits risers verticaux, celle-ci étant bloquée dans ledit orifice supérieur par un dit deuxième système de coins.

Avantageusement, ladite structure principale comprend :
- au moins deux structures centrales en élévation coopérant avec une deuxième plateforme horizontale sur laquelle reposent au moins les deux dites structures inférieures,
- ladite deuxième plateforme étant surmontée par un élément central vertical qui permet :
   ■ le guidage desdits risers verticaux au regard desdits orifices supérieurs de chacune desdites structures centrales en élévation, et
   ■ de préférence aussi le blocage des deux dites structures en élévation à l'aide d'un système de coins.

L'installation selon la présente invention est plus particulièrement encore avantageuse lorsque :
- les deux dites conduites sous-marines reposant sur le fond de la mer sont assemblées en faisceau au sein d'une même enveloppe de protection souple permettant de confiner un matériau isolant, de préférence un matériau à changement de phase du type de la paraffine ou un composé isolant gélifié, entourant lesdites conduites et
- ledit riser vertical comprend dans sa partie supérieure au-dessus dudit joint flexible un système de conduites isolées constitué d'un ensemble de deux conduites coaxiales comprenant une conduite interne et une conduite externe, un fluide ou matériau isolant, de préférence un matériau à changement de phase de type paraffine ou un composé gélifié étant placé de préférence entre les deux dites conduites, ou encore en maintenant un vide poussé entre ces dernières.

Dans un mode de réalisation préféré pour faciliter les mouvements différentiels entre risers, un premier et un deuxième risers verticaux sont maintenus sensiblement parallèles au moyen d'un système de liaison coulissant autorisant les déplacements axiaux dudit premier riser par rapport audit deuxième riser, ledit système de liaison comprenant un collier tubulaire fixé autour dudit premier riser, ledit collier étant relié rigidement à une bague tubulaire coulissant librement autour dudit deuxième riser, de préférence une pluralité de dits colliers d'un même système de liaison coulissant étant répartis le long de chacun desdits risers en alternance avec desdites bagues d'un autre dit système de liaison sur un même dit riser. Ce système de liaison coulissant permet aux risers de se déplacer verticalement mais pas transversalement, c'est-à-dire qu'ils restent sensiblement équidistants dans un plan perpendiculaire à leur axe.

Les jonctions entre les différentes composantes de l'ensemble flotteur, conduite flexible et riser vertical étant situées non loin de la surface, sont soumises aux effets combinés de la houle et du courant. De plus, le support de surface étant soumis non seulement à la houle et au courant, mais aussi au effets du vent, les mouvements d'ensemble créent au niveau du point singulier que constitue la jonction entre riser et conduite flexible, des efforts considérables dans les divers constituants mécaniques. En effet, le flotteur exerce une traction verticale vers le haut pouvant varier de quelques dizaines de tonnes à plusieurs centaines de tonnes voire même au delà de 1000 tonnes, selon la profondeur d'eau qui peut atteindre 1500m, voire 3000m, et selon le diamètre interne de la conduite qui peut varier de 6" à 14", voire 16". Ainsi les efforts à transmettre sont considérables et les mouvements d'ensemble sont cadencés, entre autres, au rythme de la houle, c'est à dire avec une période variant typiquement, en période agitée, entre 8 et 20 secondes. Les cycles de fatigue cumulés sur la durée de vie du champ atteignent ainsi des valeurs dépassant plusieurs dizaines de millions de cycles. C'est pourquoi une installation selon la présente invention comprend avantageusement au moins un flotteur, de préférence un groupe comprenant une pluralité de flotteurs installé au sommet de chacun, au moins deux dits risers verticaux, agencés de telle sorte que lesdits flotteurs sont maintenus solidaires au moyen d'une structure les supportant et autorisant des déplacements verticaux relatifs de chacun desdits groupes de flotteurs l'un par rapport à l'autre, notamment des déplacements engendrés par dilation différentielle. Lesdits flotteurs sont donc libres de se déplacer verticalement mais ils sont suffisamment espacés pour que, au gré des déformations de leurs structures porteuses, tout contact physique des groupes de flotteurs entre eux soit évité.

Un autre problème selon la présente invention est de permettre une intervention aisée à l'intérieur dudit riser depuis la surface, notamment de permettre l'inspection ou le nettoyage dudit riser vertical, par introduction d'un tube rigide depuis l'extrémité supérieure du flotteur, passant à travers ledit dispositif de liaison entre flotteur et riser vertical.

En effet, ces liaisons fond-surface véhiculent un fluide polyphasique, c'est à dire un fluide composé de pétrole brut, d'eau et de gaz. Or, lors de la remontée du fluide, la pression locale diminue et les bulles de gaz augmentent alors de volume, créant des phénomènes d'instabilité de la veine fluide pouvant conduire à des à-coups importants. Lors d'arrêts de production, le gaz se retrouve dans la partie haute et le mélange huile-eau se trouve piégé dans les points bas, c'est à dire dans la partie basse de la zone du flexible en chaînette, ainsi que dans la partie basse de la section sensiblement verticale du riser.

Le mélange polyphasique, constitué de pétrole brut, d'eau et de gaz, a tendance, lorsque la température descend en dessous d'un valeur située entre 30 et 40°C, à créer deux types de bouchons qui risquent de bloquer la production. Un premier type de bouchon est dû à la formation d'hydrates à partir de la phase gazeuse en présence d'eau, un autre type est dû au figeage de la paraffine contenue en proportion variable dans le pétrole brut de certains champs pétroliers, particulièrement en Afrique de l'Ouest.

On connaît la méthode d'intervention à l'intérieur des canalisations, dite "coiled-tubing", consistant à pousser un tube rigide de petit diamètre, en général 20 à 50mm, à travers la conduite. Ledit tube rigide est stocké enroulé par simple cintrage sur un tambour, puis détordu lorsqu'on le débobine. Ledit tube peut mesurer plusieurs milliers de mètres en une seule longueur. L'extrémité du tube située au fût du tambour de stockage est reliée par l'intermédiaire d'un joint tournant à un dispositif de pompage capable d'injecter un liquide à haute pression et à haute température . Ainsi, en poussant le tube fin à travers la conduite, en maintenant le pompage et la contre-pression, cette conduite est nettoyée grâce à l'injection d'un produit chaud capable de dissoudre les bouchons. Cette méthode d'intervention est couramment utilisée lors des interventions sur puits verticaux ou sur des conduites obstruées par des formations de paraffine ou d'hydrates, phénomènes courants et redoutés dans toutes les installations de production de pétrole brut. Le procédé de "coiled-tubing" est dénommé ci-après par "nettoyage par tubage continu" ou NTC.

L'installation selon l'invention comprend un dispositif de liaison entre ledit flotteur et l'extrémité supérieure dudit riser comprenant:
■ une deuxième conduite souple dont les extrémités sont encastrées au niveau respectivement dudit flotteur et de l'extrémité supérieure du riser,
■ la liaison de ladite deuxième conduite souple à l'extrémité supérieure dudit riser se faisant par l'intermédiaire d'un dispositif en forme de col de cygne, lequel dispositif en forme de col de cygne assure aussi la liaison entre ledit riser et une dite conduite de liaison avec le support flottant, de préférence une dite conduite flexible,
■ ladite deuxième conduite souple étant, de préférence, prolongée à travers ledit flotteur par une conduite tubulaire rigide traversant le flotteur de part en part, de sorte que l'on peut intervenir à l'intérieur dudit riser vertical à partir de la partie supérieure du flotteur à travers ladite conduite tubulaire rigide, puis ledit dispositif de liaison constitué de ladite deuxième conduite souple est à travers ledit dispositif en forme de col de cygne, de façon à accéder à l'intérieur dudit riser et le nettoyer par injection de liquide et /ou par raclage de la paroi interne dudit riser, puis de ladite conduite sous-marine reposant au fond de la mer.

Le dispositif en forme de col de cygne comprend une partie droite supérieure qui assure la jonction entre ledit riser vertical et ladite deuxième conduite souple reliée audit flotteur. Sur cette dite partie droite du dispositif en forme de col de cygne, une dérivation courbe en forme de coude, permet la jonction entre l'extrémité dudit riser vertical et l'extrémité de ladite conduite flexible elle-même reliée audit support flottant. Les extrémités de ladite courbe étant sensiblement tangente avec la courbe de la chaînette constituée par ladite conduite flexible qui assure la liaison au support flottant, et sensiblement tangente avec ladite partie droite du dispositif en forme de col de cygne.

Un autre avantage de l'installation selon l'invention est que tous les éléments peuvent être préfabriqués à terre avant d'être installés. Ils peuvent ainsi être montés "à blanc" pour vérifier que tous les éléments coopèrent correctement, y compris les moyens de verrouillage ; ainsi, l'assemblage de l'installation est considérablement simplifié et le temps opérationnel des navires d'installation réduit au minimum. Dans l'art antérieur, les conduites sous-marines étaient posées puis, après installation des risers, des manchettes coudées de raccordement étaient fabriquées sur la base d'une métrologie de grande précision réalisée grâce aux ROVs. La manchette, préfabriquée à terre ou sur site peut mesurer plusieurs dizaines de mètres et doit ensuite être installée par le même ROV, ce qui représente un temps opérationnel considérable, donc un coût très élevé en raison de la sophistication des navires d'installation spécialisés. Le gain réalisé par le dispositif et le procédé selon l'invention, se chiffre en plusieurs journées de navire d'installation ainsi qu'en la suppression des connecteurs automatiques indispensables à chacune des extrémités de la manchette préfabriquée, ce qui représente une réduction de coût considérable.

Les objectifs de la présente invention sont donc également obtenus par un procédé de mise en place d'une installation qui comprend les étapes dans lesquelles :
- on met en place sur le fond de la mer au moins une dite conduite sous-marine dont la partie terminale présente une dite courbure en forme de coude tournée vers le haut, et à l'extrémité de laquelle est fixée une première partie, notamment mâle ou femelle, d'un dit élément de raccordement, et
- on descend une dite embase qui maintient en position ladite courbure en forme de coude et la stabilise au fond de la mer, et
- on descend au moins un dit riser vertical à travers un orifice de ladite embase, l'extrémité inférieure dudit riser comprenant une dite deuxième partie complémentaire d'un dit élément de raccordement, notamment respectivement femelle ou mâle, de manière à réaliser ledit raccordement entre les deux dites première et deuxième parties complémentaires dudit élément de raccordement, et
- on réalise le blocage dans ladite embase de ladite portion terminale inférieure dudit riser (5₁) et de ladite partie terminale de conduite reposant au fond de la mer présentant une dite courbure en forme de coude.

Plus particulièrement, le procédé selon l'invention comprend les étapes dans lesquelles :
1- on met en place au fond de la mer au moins une dite conduite sous-marine dont la partie terminale présentant une courbure en forme de coude est solidaire d'une dite structure inférieure, de préférence préalablement installé en surface, et
2- on descend une dite structure supérieure par-dessus ladite structure inférieure, et on bloque mécaniquement, de préférence encore à l'aide d'un système de coins ladite structure inférieure à l'intérieur de ladite cavité de ladite structure supérieure ; et
3- on stabilise ladite structure supérieure en faisant coopérer desdits éléments de stabilisation avec le sol par-dessus une dite plateforme à la base de ladite structure supérieure reposant sur le fond, notamment en descendant des corps morts sur ladite plateforme, ou en enfonçant les ancres à succion à travers un orifice de ladite plateforme ;.
4- on descend au moins un dit riser vertical à travers au moins un dit orifice supérieur de ladite structure supérieure, puis
5- après approche des parties complémentaires dudit élément de raccordement on réalise ledit raccordement, et
6- on réalise le blocage de ladite portion de conduite terminale à l'extrémité inférieure dudit riser vertical entre ledit élément de raccordement, et ledit joint flexible, dans ledit orifice supérieur à l'aide d'un système de coins.

Dans une version préférée, le blocage de ladite structure inférieure à l'aide d'un système de coins détaillé ci-dessus à l'étape 2 est effectuée à la fin, donc après l'étape finale 6.

D'autres caractéristiques et avantages de la présente invention apparaîtront à la lumière détaillée des modes de réalisation qui vont suivre, en référence aux figures 1 à 12.

La figure 1 est une vue en coupe de la partie supérieure d'une tour hybride reliée à un support flottant de type FPSO, avec un navire 10 effectuant une opération d'intervention à la verticale de ladite tour.

La figure 2 représente une vue de la partie inférieure de l'installation selon l'invention, avant raccordement de l'extrémité inférieure du riser vertical avec ladite conduite sous-marine reposant au fond de la mer.

La figure 3A représente une vue de côté de la partie inférieure de l'installation selon la présente invention, après raccordement du riser vertical et avant son blocage dans l'embase.

La figure 3B représente une vue de dessus du système de coins servant au centrage-blocage du riser vertical dans une embase.

La figure 4 est une vue en coupe de côté de la partie inférieure de l'installation selon l'invention, après blocage-centrage du riser dans l'embase et montrant les mouvements angulaires possibles de la partie supérieure du riser vertical ainsi qu'un corps-mort et une ancre à succion.

Les figures 5A et 5B sont des vues en coupe, respectivement de côté (fig. 5A) et de face (fig. 5B), d'un structure inférieure présentant une structure pyramidale du type tabouret. Dans la figure 5A, la section correspond à une coupe selon l'axe AA de la figure 5B.

La figure 6 est une vue en coupe de côté de la partie inférieure de l'installation selon l'invention, comprenant deux risers verticaux installés en parallèle et raccordés à leur base à deux conduites sous-marines reposant au fond de la mer, assemblés dans un faisceau.

La figure 7 est une vue en coupe représentant les sections d'une conduite interne et d'une conduite externe d'un riser vertical isolé par un ensemble du type "pipe-in-pipe".

La figure 8 représente une vue en coupe d'une section d'un faisceau de deux conduites sous-marines reposant au fond de la mer.

La figure 9 est une vue de côté de deux risers verticaux solidarisés par des moyens de liaison et de guidage coulissants.

La figure 10 est une vue de côté de l'extrémité supérieure des risers verticaux avec un dispositif du type col de cygne permettant de les relier d'une part, au support flottant par l'intermédiaire d'une conduite flexible, et d'autre part, aux flotteurs.

Les figures 11 et 12 sont respectivement des vues de côté et de dessus des flotteurs situés en continuité directe des deux risers verticaux.

Les figures 13 et 14 représentent un mode de réalisation avec une deuxième plateforme surmontée par un élément central vertical de guidage.

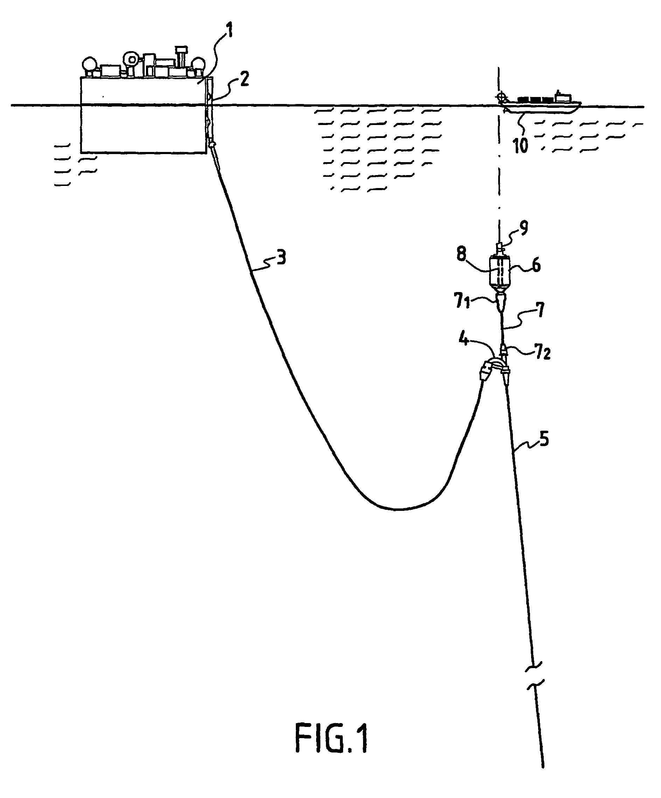

Sur la figure 1, on a représenté une installation de liaison fond-surface pour conduite sous-marine 10 reposant au fond de la mer, notamment à grande profondeur, comprenant :
a) au moins un riser vertical 5 relié à son extrémité inférieure à au moins une conduite sous-marine 10 reposant au fond de la mer (non représentée), et à son extrémité supérieure à au moins un flotteur 6, et
b) au moins une conduite de liaison 3, de préférence une conduite flexible, assurant la liaison entre un support flottant 1 et l'extrémité supérieure 4 dudit riser vertical 5.

Le FPSO 1 est ancré sur un champ pétrolier par 1 500m de hauteur d'eau, par un système d'ancrage non représenté et comporte au niveau de son bordé un système de supportage 2 de conduites flexibles 3 d'effluents pétroliers 3 en configuration de chaînette remontant vers un dispositif en forme de col de cygne 4, lui-même solidaire de l'extrémité supérieure d'un riser vertical 5. L'ensemble est maintenu en tension par ledit flotteur 6 installé en tête du riser vertical 5 par l'intermédiaire d'une conduite flexible 7. Ledit flotteur 6 est traversé par une conduite 8 en continuité dudit flexible 7 pour déboucher sur un orifice obturé par une vanne 9. Un navire d'intervention 10 situé à la verticale dudit flotteur peut effectuer une opération de maintenance par coil-tubing à travers le flotteur 6, de manière à pousser dans la partie verticale de la conduite, une conduite rigide, non représentée, de faible diamètre, en général 50mm, destinée à nettoyer l'intérieur de la canalisation au fur et à mesure de sa progression. Les dispositifs de coil-tubing étant connus de l'homme de l'art dans le domaine des interventions sur puits pétroliers ne seront pas développés plus en détails ici.

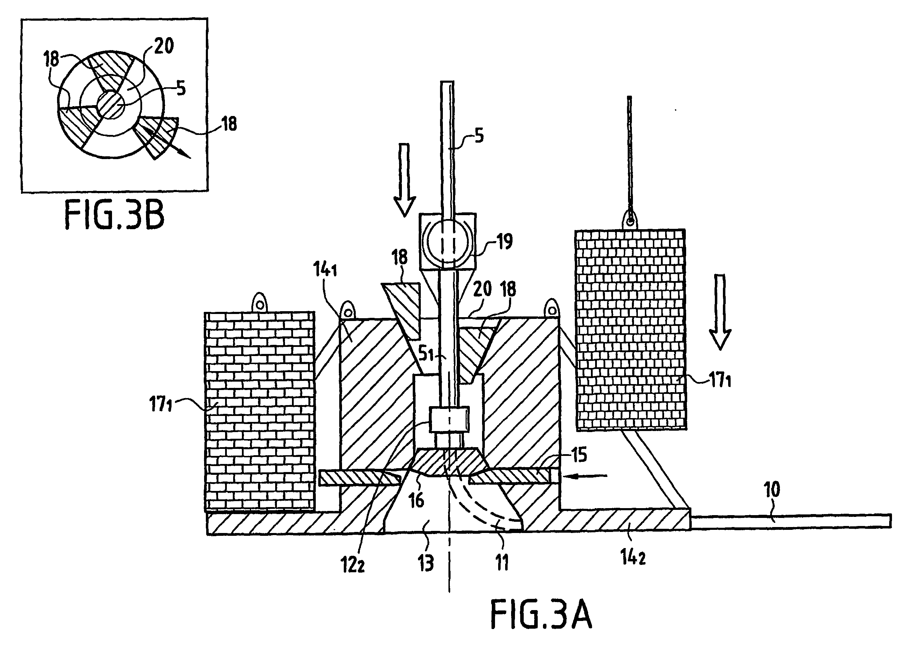

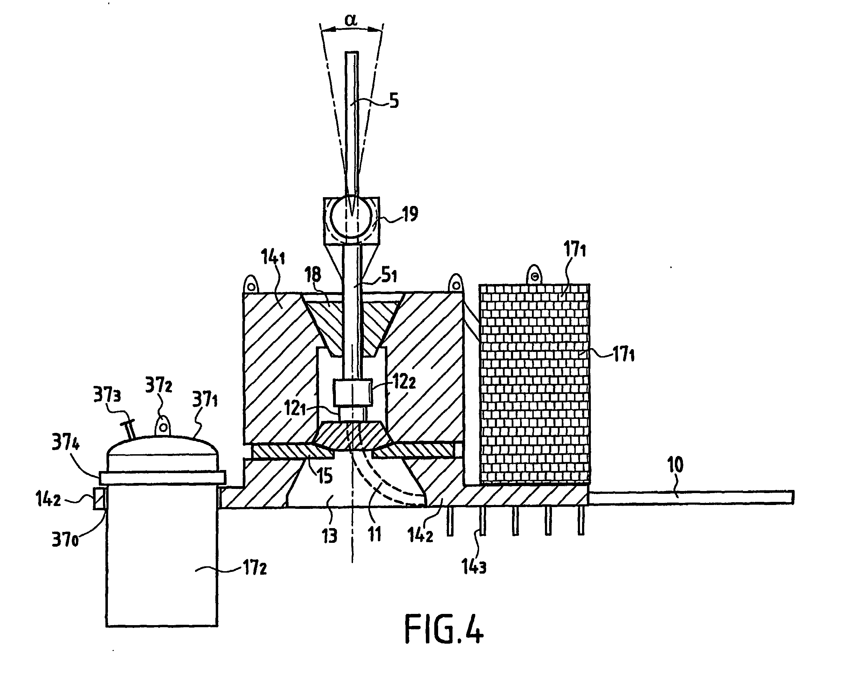

Sur les figures 3A et 4, on a représenté la liaison entre l'extrémité inférieure dudit riser vertical 5 et une dite conduite sous-marine 10 reposant au fond de la mer par l'intermédiaire d'un système d'ancrage comprenant une embase 13-14 posée sur le fond et restant en place de par son propre poids.

ledit riser vertical comprend à son extrémité inférieure une portion de conduite terminale 5₁, de préférence renforcée, reliée à la partie supérieure 5₂ dudit riser vertical par un joint flexible 19 lequel autorise des mouvements angulaires α de ladite partie supérieure 5₂ par rapport à ladite portion de conduite terminale 5₁.

Le joint flexible 19 autorise une variation importante de l'angle α entre l'axe de la tour et l'axe de la partie de riser vertical solidaire de l'embase, sans engendrer de contraintes significatives dans les portions de conduite situées de part et d'autre dudit joint flexible. Ce joint flexible peut être de façon connue soit une rotule sphérique avec joints d'étanchéité, soit une rotule lamifiée constituée de sandwichs de feuilles d'élastomères et de tôles adhérisées, capable d'absorber des mouvement angulaires importants par déformation des élastomères, tout en conservant une étanchéité parfaite en raison de l'absence de joints de frottement, soit encore une longueur limitée de conduite flexible capable de fournir le même service. Dans tous les cas on comprend que le dit joint flexible 19 est creux et son diamètre interne est sensiblement de même diamètre que les conduites adjacentes constituant ledit riser vertical 5, de manière à ne pas interférer et à faciliter le passage d'outils de raclage ou d'intervention par "coil-tubing".

Ladite partie terminale 11 de la conduite reposant au fond de la mer présente une courbure en forme de coude, de préférence avec un grand rayon de courbure, notamment un rayon de courbure supérieur à 5 mètres, plus particulièrement de l'ordre de 5 à 10 mètres. Selon la présente invention, on entend donc par "coude" deux courtes sections rectilignes de conduite disposées à 90°, séparées et reliées entre elles par une section courbe présentant ledit rayon de courbure.

L'extrémité inférieure de ladite portion terminale 5₁ du riser vertical est reliée à l'extrémité supérieure de ladite courbure terminale 11 de la conduite sous-marine reposant au fond, par un unique élément de raccordement 12 entre ledit riser vertical et ladite conduite sous-marine reposant au fond 10, de préférence un connecteur automatique.

Ladite embase 13-14 maintient rigidement en position verticale fixe et reliées l'une à l'autre par l'intermédiaire dudit élément de raccordement 12 :
■ d'une part, ladite portion de conduite terminale 5₁ dudit riser vertical et,
■ d'autre part, ladite courbure terminale en forme de coude 11 de ladite conduite sous-marine reposant au fond 10, celle-ci étant tournée vers le haut.

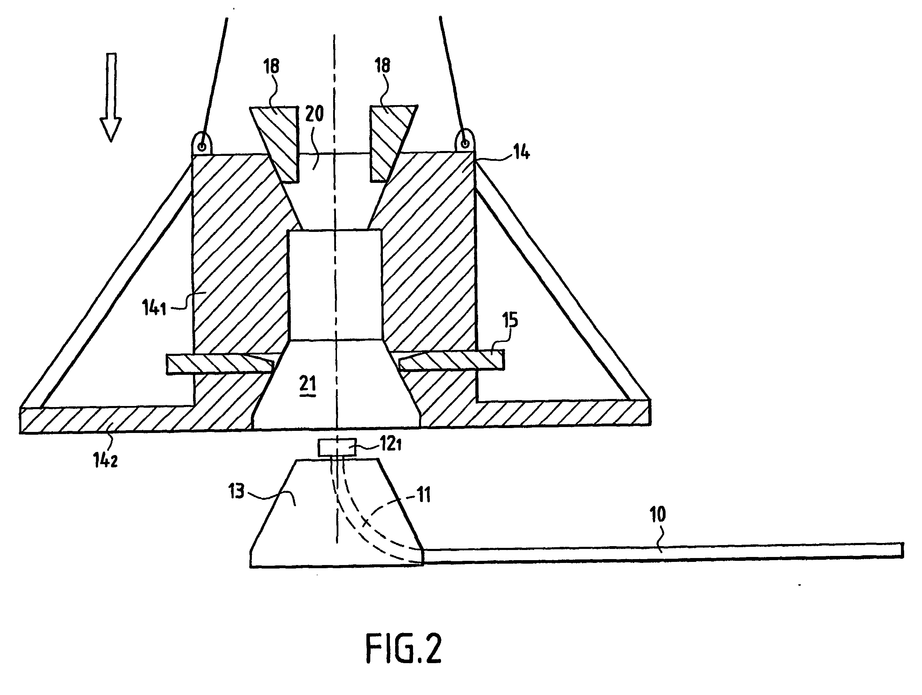

Sur la figure 2, ladite embase comprend :
. a) une structure inférieure 13 posée sur le fond qui maintient en position verticale tournés vers le haut, ladite courbure terminale en forme de coude 11 de ladite conduite reposant au fond 10 et une première partie 12₁ d'un dit élément de raccordement 12 à l'extrémité de ladite courbure, et
b) une structure supérieure 14-18 qui assure le guidage de ladite portion terminale 5₁ dudit riser vertical 5, qui la maintient en position verticale et qui coopère avec ladite structure inférieure 13, de sorte que ladite structure supérieure 14-18 se pose par-dessus ladite structure inférieure 13 de manière à guider une deuxième partie 12₂ dudit élément de raccordement 12 située à l'extrémité inférieure de ladite portion terminale 5₁ dudit riser vertical en regard de ladite première partie complémentaire 12₁ de ladite deuxième partie 12₂ dudit élément de raccordement 12, et de manière à stabiliser ladite structure inférieure 13 posée sur le fond, de par le poids de ladite structure supérieure 14-18. La structure inférieure 13 est une structure métallique légère de type tabouret qui est intégré à l'extrémité en forme de coude de ladite conduite reposant au fond de la mer 10. Sur la figure 2, on a représenté une des deux parties complémentaires de l'élément de raccordement 12, à savoir une partie mâle 12₁ apte à venir se raccorder à une partie femelle 12₂ d'extrémité inférieure de ladite portion terminale 5₁ du riser vertical 5 (figure 4).

Le principe des connecteurs automatiques 12 étant connu de l'homme de l'art dans le domaine de l'hydraulique et de la pneumatique, ne sera pas décrit ici dans ses détails. Ce mode de connexion présente l'avantage d'être entièrement réversible, dans la mesure où le connecteur automatique est conçu pour pouvoir être déconnecté. Il est ainsi possible, en cours d'exploitation, d'intervenir sur un seul riser pour le démonter et le remplacer sans perturber le reste de la production et donc sans avoir à arrêter la production des risers voisins.

Sur la figure 2, ladite structure supérieure 14-18 comprend plus précisément:
- une structure principale 14 et des corps-morts de stabilisation 17₁ qui viennent se poser sur la structure principale 14,
- ladite structure principale en forme de chapeau14 comprend :
   ■ une structure centrale 14₁ en élévation à géométrie externe cylindrique de section carrée ou circulaire et renfermant une cavité intérieure 21 ouverte à la base de ladite structure centrale, ladite cavité 21 présentant une forme évasée s'élargissant vers la base et complémentaire à la forme externe pyramidale de ladite structure inférieure 13 de manière à venir coiffer celle-ci. Ladite structure centrale 14₁ comprenant un orifice supérieur 20 traversé par ladite portion terminale 5₁ dudit riser vertical 5, celui-ci étant bloqué dans ledit orifice 20 par un deuxième système de coins 18, ledit orifice 20 communiquant avec ladite cavité intérieure 21, et
   ■ une plateforme inférieure horizontale périphérique 14₂ à la base de ladite structure centrale 14, et entourant celle-ci, sur laquelle viennent se poser lesdits corps morts 17₁.

Ladite structure inférieure 13 est une structure creuse de type tabouret de forme pyramidale tronquée au sommet, et traversée latéralement à sa base par la partie terminale courbe 11 de la conduite reposant au fond 10, laquelle débouche à son sommet sur la partie plane 13₁ sur laquelle repose une partie mâle 12₁ de l'élément de raccordement 12 à l'extrémité de ladite conduite 10.

Sur la figure 4, l'embase 14₂ comporte, sur la partie droite du dessin, des bêches 14₃ reprennent les efforts de poussée dus à la dilatation de la conduite 10, ainsi qu'un élément de stabilisation de type corps-mort 17₁

En effet, la conduite reposant sur le fond de la mer se trouve sensiblement en alignement jusqu'au pied de la tour, c'est à dire jusqu'à la structure d'embase. Les variations de température engendrent des efforts internes à la conduite qui créent une poussée horizontale sur l'embase parallèlement à l'axe de ladite conduite pouvant atteindre plusieurs dizaines de tonnes,. Ces bêches 14₃ sont disposées de préférence perpendiculairement à l'axe de la conduite et pénètrent profondément le sol, de manière à contenir ces efforts de poussée et éviter tout déplacement de ladite embase. Pour la clarté de la description de l'embase dans les diverses autres figures, lesdites bêches 14₃ n'ont pas été représentées.

Dans le cas d'une embase stabilisée par ancre à succion 17₂, le concept même d'ancre à succion 17₂ est bien adapté pour reprendre de tels efforts. Sur la partie gauche de la figure 4, est représentée une ancre à succion 17₂ enfoncée à travers un orifice 37₀ de la plateforme 14₂. Les ancres à succion 17₂ ont des conduites en forme de cloche de grand diamètre et en général allongées, présentant en face inférieure une ouverture libre et en face supérieure une obturation étanche 37₁. L'ancre 17₂ est descendue au moyen de l'oreille de levage 37₂ jusqu'à pénétrer le sol. Un ROV, non représenté, se connecte alors sur l'orifice 37₃ et à l'aide d'une pompe, met en dépression l'intérieur de la cloche. L'effort résultant tend à faire pénétrer l'ancre à succion dans le sol, jusqu'à ce que le talon 37₄ vienne en butée avec la plateforme 14₂ de la structure de l'embase, la stabilisant ainsi. De telles ancres 17₂ peuvent mesurer plusieurs mètres de diamètre et 20 à 30m de hauteur, voire plus. Elles peuvent peser de 15 à 50 tonnes chacune, voire plus.

Sur les figures 3A, 4 et 5A, ladite structure inférieure 13 est rendue solidaire de ladite structure supérieure 14-18 par un système de coins 15.

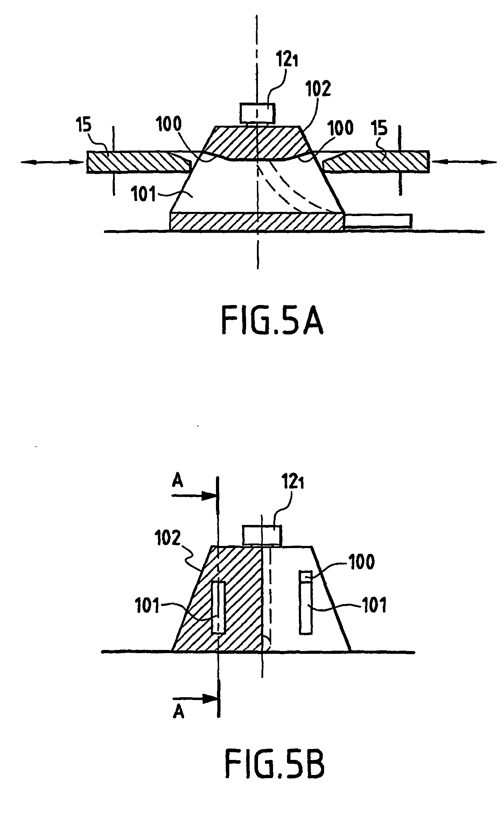

Les figures 5A & 5B sont des vues en coupe, respectivement de côté et de face de la structure du type tabouret 13. Dans la figure 5A la section correspond à une coupe selon l'axe AA, et détaille les faces 100 dudit tabouret 13 coopérant avec les coins 15 précédemment décrits. Lesdits coins 15, non représentés sur la figure 5B, ont une largeur correspondant à largeur d'une ouverture 101 au sein de la structure du tabouret 13. Le tabouret 13 est représenté avec un forme pyramidale tronquée, ses faces obliques 102 coopèrent avec une contreforme identique au sein de la structure principale 14 de manière à ce que l'ensemble tabouret 13 plus structure 14 ne fasse plus qu'un, dès lors que les coins 15 sont verrouillés.

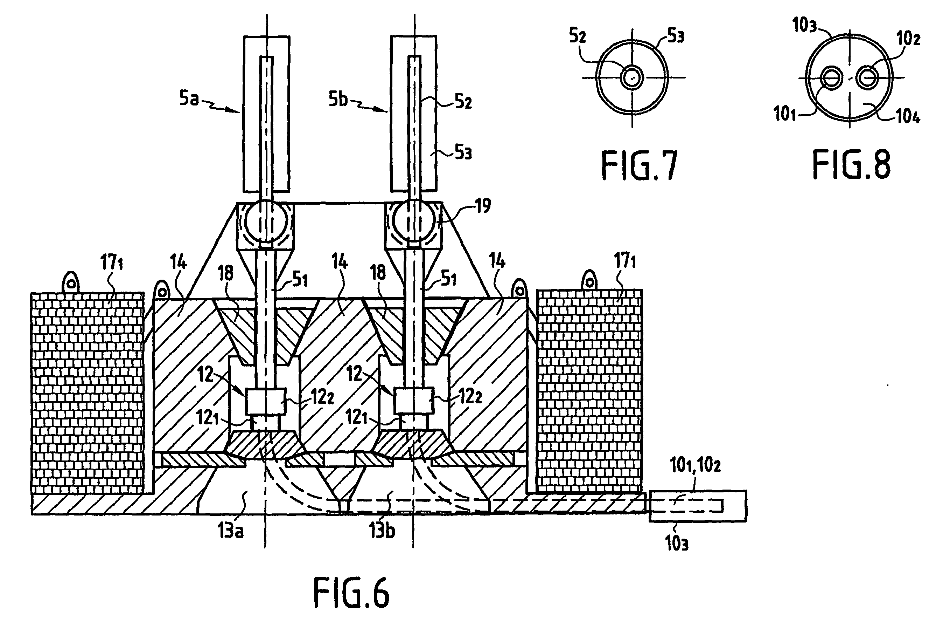

Sur la figure 6, on a représenté une installation qui comprend:
- au moins deux dits risers verticaux 5a, 5b sensiblement parallèles et rapprochés, chacun étant relié à son extrémité supérieure à au moins un flotteur 30a, 30b et,
- ladite embase 14-18 maintenant en position verticale fixe et les reliant les unes aux autres par l'intermédiaire desdits éléments de raccordement 12 :
   ■ d'une part, deux dites portions de conduite terminale 5₁ desdits risers verticaux et,
   ■ d'autre part, respectivement deux dites courbures terminales en forme de coude 11 de deux dites conduites sous-marines reposant au fond 10, celles-ci étant tournées vers le haut.
- deux dites structures inférieures 13a, 13b posées sur le fond, chacune maintenant en position verticale tournée vers le haut une dite courbure terminale 11 d'une dite conduite sous-marine 10₁, 10₂ reposant au fond de la mer et une première partie 12₁ d'un dit élément de raccordement 12 à l'extrémité de ladite courbure 11 et,
- une dite structure supérieure 14-21 qui assure le guidage des deux dites portions terminales 5₁ desdits risers verticaux 5a, 5b et les maintient en position verticale et qui coopère avec les deux dites structures inférieures 13a, 13b, de sorte que ladite structure supérieure 14-21 se pose par-dessus et vient coiffer deux dites structures inférieures 13a, 13b, côte à côte de manière à guider une dite deuxième partie 12₂ dudit élément de raccordement 12 située à l'extrémité inférieure de ladite portion terminale 5₁ de chacun desdits risers verticaux, en regard de ladite première partie 12₁ dudit élément de raccordement 12 à l'extrémité de ladite courbure de chacune desdites conduites 10₁, 10₂ reposant au fond de la mer et stabiliser lesdites structures inférieures 13 posées sur le fond, de par le poids de ladite structure supérieure 14-21.

Ladite structure supérieure comprend une structure principale 14 comprenant deux cavités intérieures 21 ouvertes à la base et présentant vers le bas chacune une forme évasée complémentaire à la forme externe pyramidale d'une dite structure inférieure 13a, 13b et apte à coiffer celle-ci, et deux dits orifices supérieurs 20 communiquant chacun avec une dite cavité intérieure 21, chacun desdits orifices supérieurs 20 étant traversé par desdites portions terminales 5₁ desdits risers verticaux 5a, 5b, celles-ci étant centrées et bloquées dans lesdits orifices supérieurs 20 par desdits deuxièmes systèmes de coins 18.

Sur les figures 6 et 7, ledit riser vertical 5 comprend dans sa partie supérieure au-dessus dudit joint flexible 19 un système de conduites constitué d'un système isolant thermique de type pipe-in-pipe comprenant un ensemble de deux conduites coaxiales comprenant une conduite interne 5₂ et une conduite externe 5₃, un fluide ou matériau isolant 5₄ constitué par exemple de paraffine, étant placé de préférence entre les deux dites conduites 5₂, 5₃.

Sur les figures 6 et 8, les deux dites conduites sous-marines 10₁, 10₂ reposant sur le fond de la mer sont assemblées en faisceau au sein d'une même enveloppe de protection souple 10₃ circulant, permettant de confiner un matériau isolant 10₂, de préférence de la paraffine, entourant lesdites conduites.

Sur la figure 4 tous les éléments constitutifs du bas de la tour sont en configuration définitive, la géométrie globale de l'ensemble ne pouvant plus bouger, sauf dans la partie verticale du riser située au dessus du joint flexible 19.

La figure 6 représente la partie basse d'une tour similaire à celle de la figure 5, comportant deux risers verticaux 5a, 5b reliés à deux conduites indépendantes 10₁, 10₂. Les risers sont installés en parallèle selon la procédure décrite ci-dessus.

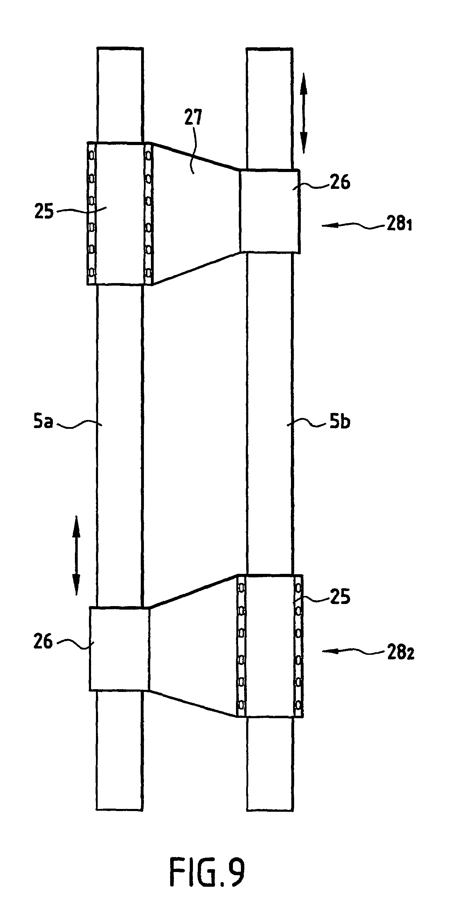

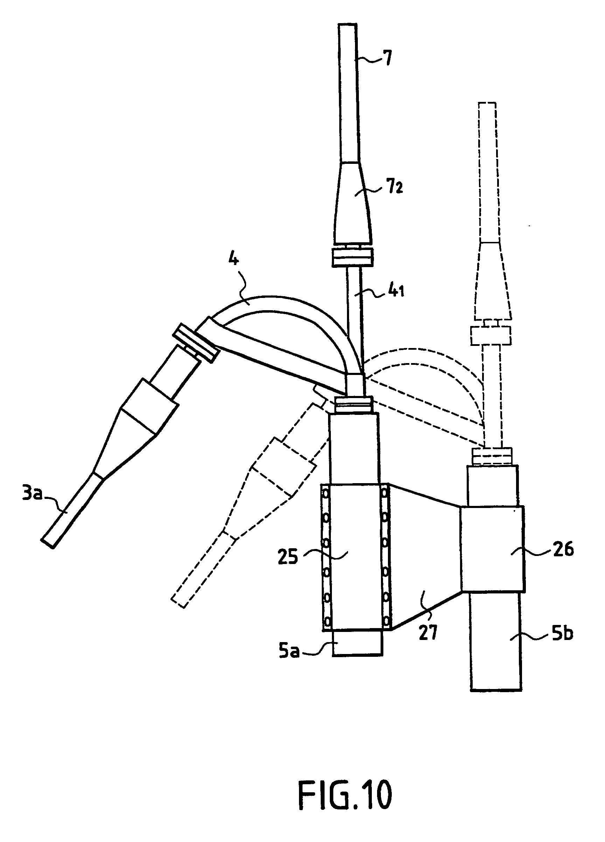

La figure 9 détaille une manière préférée pour autoriser les déplacements axiaux d'un des risers 5a, 5b par rapport à l'autre, de manière à ce que les dilatations différentielles entre risers puissent être libérées et n'induisent pas de contraintes inacceptables, qui risqueraient d'endommager, voire de ruiner la tour. Le dispositif selon l'invention est constitué d'un collier tubulaire 25 fermement fixé sur le riser 5a et relié rigidement en 27 à une bague tubulaire 26 coulissant librement sur le riser 5b. Les colliers sont répartis le long des risers, à intervalles réguliers ou non, et installés de préférence en opposition comme représenté sur la même figure. Ainsi, les deux risers étant solidaires de l'embase au niveau des joints flexibles 19, si seul le riser 5a est en température les bagues coulissantes 26 autorisent l'expansion dudit riser 5a et la quasi intégralité de l'expansion se retrouve en tête de riser vertical, au niveau du col de cygne comme indiqué sur la figure 10.

Sur la figure 10, l'installation comprend un dispositif de liaison 4, 7 entre ledit flotteur 6 et l'extrémité supérieure dudit riser 5, comprenant:
■ une deuxième conduite souple 7 dont les extrémités sont encastrées au niveau respectivement de la sous-face dudit flotteur 6 et de l'extrémité supérieure du riser 5,
■ la liaison de ladite deuxième conduite souple 7 à l'extrémité supérieure dudit riser 5 se faisant par l'intermédiaire d'un dispositif en forme de col de cygne 4, lequel dispositif en forme de col de cygne 4 assure aussi la liaison entre ledit riser 5 et une dite conduite flexible 3 avec le support flottant,
■ ladite deuxième conduite souple 7 étant prolongée à travers ledit flotteur 6 par une conduite tubulaire rigide 8 traversant le flotteur de part en part, de sorte que l'on peut intervenir à l'intérieur dudit riser vertical 5 à partir de la partie supérieure du flotteur 6 à travers ladite conduite tubulaire rigide 8, puis ledit dispositif de liaison constitué de ladite deuxième conduite souple 7 est à travers ledit dispositif en forme de col de cygne 4, de façon à accéder à l'intérieur dudit riser 5 et le nettoyer par injection de liquide et /ou par raclage de la paroi interne dudit riser (5), puis de ladite conduite sous-marine 10 reposant au fond de la mer.

Ladite deuxième conduite souple 7 présente à ses extrémités des éléments de variation progressive d'inertie de section 7₁, 7₂ au niveau respectivement de la sous-face du flotteur 6 et de l'extrémité supérieure 4₁ du col de cygne.

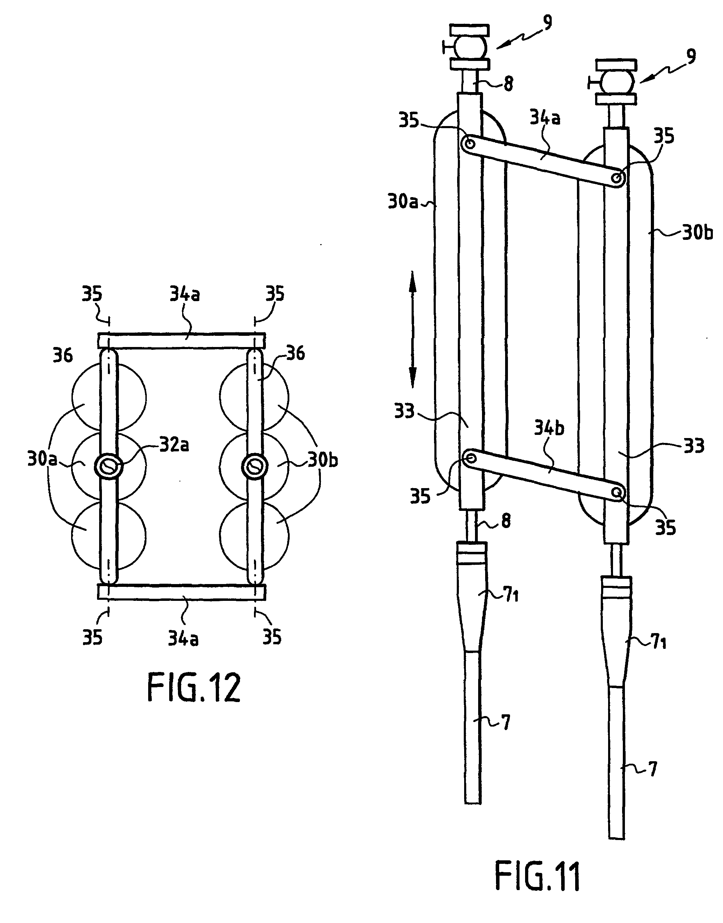

Sur la figure 11, l'installation selon l'invention comprend deux groupes comprenant chacun une pluralité de flotteurs 30a, 30b au sommet des au moins deux dits risers verticaux 5a, 5b. Lesdits flotteurs 30a, 30b d'un même dit groupe sont maintenus solidaires et fixes les uns par rapport aux autres au moyen d'une structure rigide en forme de cadre rectangulaire constitué de deux barres parallèles verticales 33 et deux barres parallèles transversales 36 les renfermant et les supportant. Les deux cadres rectangulaires des deux groupes de flotteurs 30a, 30b sont reliés l'un à l'autre par deux cadres articulés en forme de parallélogramme sur chaque côté, constitués chacun par deux barres parallèles sensiblement verticales 33 et reliées à leurs extrémités par des articulations 35 aux extrémités de barres parallèles transversales supérieure 34a et inférieure 34b.

L'ensemble forme un parallélépipède déformable par translation verticale desdits cadres rectangulaires l'un par rapport à l'autre, autorisant des déplacements verticaux relatifs de chacun desdits groupes de flotteurs l'un par rapport à l'autre, engendrés notamment par dilation différentielle.

Comme détaillé sur les figures 11 et 12, la structure supporte un groupe de trois flotteurs 30a, dont le flotteur central est traversé par une conduite 8 en continuité du flexible 7 et débouchant à la partie supérieure dudit flotteur sur un orifice étanche 9, par exemple une vanne à boisseau sphérique. Ainsi on effectue avantageusement toutes les opérations de maintenance du riser et d'une grande portion de conduite reposant sur le fond de la mer à partir d'un navire de surface 10 installé à la verticale de ladite vanne d'accès 32a ; l'opération de coil tubing étant possible dans la partie de conduite reposant sur le fond de la mer, à condition que le rayon de courbure du coude situé dans l'embase soit suffisament grand, par exemple 5m, voire 7m ou plus.

Dans la figure 10, le riser 5b étant froid, se trouve plus court que le riser 5a à température plus élevée. De même, sur la figure 11 le groupe de flotteurs 30b se trouve décalé vers le bas sensiblement d'une même distance. Les deux groupes de flotteurs 30a, 30b sont maintenus sensiblement à équidistance au moyen des structures en parallélogramme formant des parallélépipèdes déformables verticalement, autorise les déplacements verticaux engendrés, par exemple par la dilatation différentielle des deux risers 5a, 5b, l'un étant chaud 30a, l'autre 30b étant à la température de l'eau de mer, donc froid.

Les moyens de liaison des flotteurs ont été décrits au moyen de barres 33, 34, articulées au niveau d'axes 35, mais peuvent tout aussi bien être réalisés par des éléments déformables, par exemple en élastomères, étant entendu que le but recherché est de maintenir à distance sensiblement constante les deux groupes de flotteurs 30a-30b, pour éviter qu'ils ne s'entrechoquent sous l'effet de la houle et du courant, tout en autorisant les mouvements relatifs selon une direction correspondant sensiblement à l'axe des conduites verticales.

De la même manière, dans la figure 9, on reste dans le cadre de l'invention si l'on remplace les colliers 25 et bagues coulissantes 26 servant à guider les deux risers verticaux dans la partie courante, par des barres articulées similaires à celles précédemment décrites pour le guidage des flotteurs 30.

Le riser vertical 5 peut être, soit préfabriqué à terre puis remorqué sur le site, soit fabriqué directement sur le site peu avant l'installation. II est constitué d'une portion courante de riser 5 à l'extrémité inférieure de laquelle est installé un joint flexible 19, connecté à une portion de riser renforcé 5₁, elle même solidaire de la seconde partie 12₂ du connecteur automatique 12. Le passage interne du joint flexible 19, ainsi que la portion de riser renforcé 5₁ présentent un diamètre intérieur de préférence identique à celui du riser 5. Ladite portion de riser 5₁ est renforcée pour assurer la rigidité de l'ensemble dès lors que les coins 18 sont verrouillés en position définitive. Ledit renforcement résulte soit d'une simple augmentation de l'épaisseur de la paroi, soit du rajout de raidisseurs externes, soit d'une combinaison des deux ou de tout autre moyen visant à donner plus de résistance et de rigidité à l'ensemble.

Dans le procédé de mise en place d'une installation selon l'invention, on réalise les étapes dans lesquelles :
1- on met en place au fond de la mer au moins une dite conduite sous-marine 10 dont la partie terminale présentant une courbure en forme de coude 11 est solidaire d'une dite structure inférieure 13 de préférence préalablement installé en surface, et à l'extrémité de laquelle est fixée une partie mâle 12₁ ou femelle 12₂ d'un dit élément de raccordement 12, et
2- on descend une dite structure principale 14 par-dessus ladite structure inférieure 13, et de préférence, on bloque mécaniquement, de préférence encore à l'aide d'un système de coins 15 actionnés par exemple par des vérins hydrauliques, ledit structure inférieure 13 à l'intérieur de ladite cavité 21 de ladite structure principale 14 qui forment ainsi un ensemble de grande rigidité,
3-on stabilise ladite structure principale 14 en descendant depuis la surface des corps morts 17₁ par-dessus une dite plateforme périphérique 14₂ reposant sur le fond, cette mise en place se fait sous contrôle d'un ROV.
4- on descend au moins un dit riser vertical 5a, 5b à travers au moins un dit orifice supérieur 20 de ladite structure supérieure 14, puis l'extrémité inférieure de ladite portion de riser 5₁ engagée dans ledit orifice supérieur 20 comprenant une dite partie complémentaire respectivement femelle 12₂ ou mâle 12₁ d'un dit élément de raccordement 12, de manière à réaliser ledit raccordement entre les deux parties complémentaires 12₁, 12₂ dudit élément de raccordement 12, puis
5- après approche des parties complémentaires dudit élément de raccordement 12 on réalise ledit raccordement, et
6- on réalise le blocage de ladite portion de conduite terminale 5₁ à l'extrémité inférieure dudit riser vertical entre ledit élément de raccordement 12 et ledit joint flexible 19, dans ledit orifice supérieur 20, à l'aide d'un système de coins 18. Pour ce faire, on descend les coins 18 qui viennent bloquer la partie inférieure 5₁ du riser situé entre le connecteur 12 et un joint flexible constitué d'une butée articulée à passage intégral 19. Les coins 18, représentés sur les figures 3a & 3b en position rétractée à droite et en position engagée à gauche, sont actionnés par un ROV au moyen de vérins hydrauliques non représentés.

Dans une version de l'invention comportant au moins deux risers verticaux 5a, 5b, on les installe de préférence de manière indépendante l'une de l'autre et on les maintient sensiblement parallèles dans un même plan sur toute la hauteur par des colliers 25 et bagues 26 coulissantes ou par tout autre moyen permettant de libérer les translations selon une direction parallèle à l'axe desdits risers.

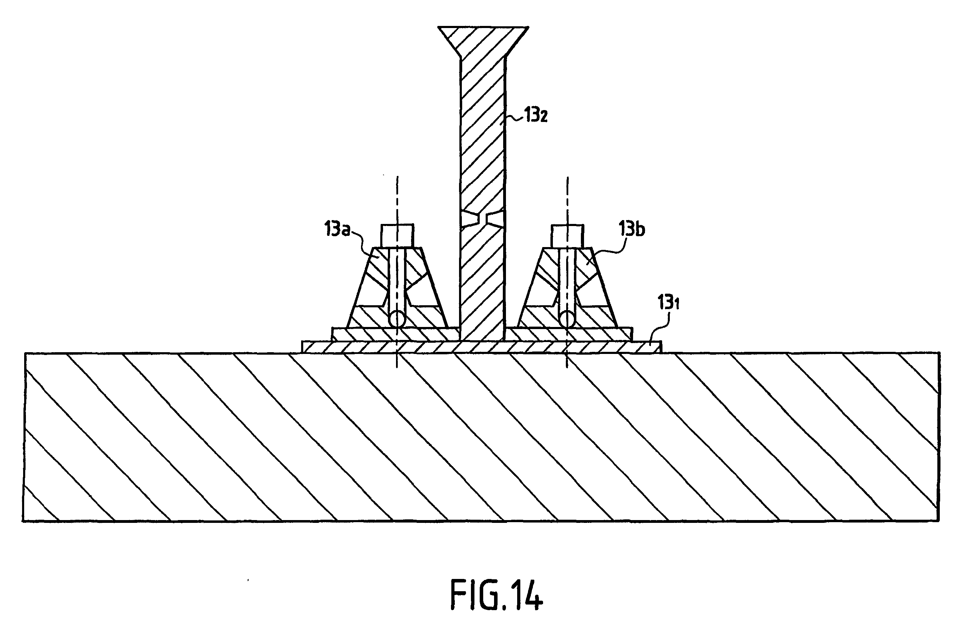

Sur la figure 13, on a représenté une deuxième plateforme 13₁ sur laquelle sont disposées deux structures en tabouret 13a, 13b, de part et d'autre d'un élément central vertical 13₂ surmontant ladite deuxième plateforme 13₁ en son centre.

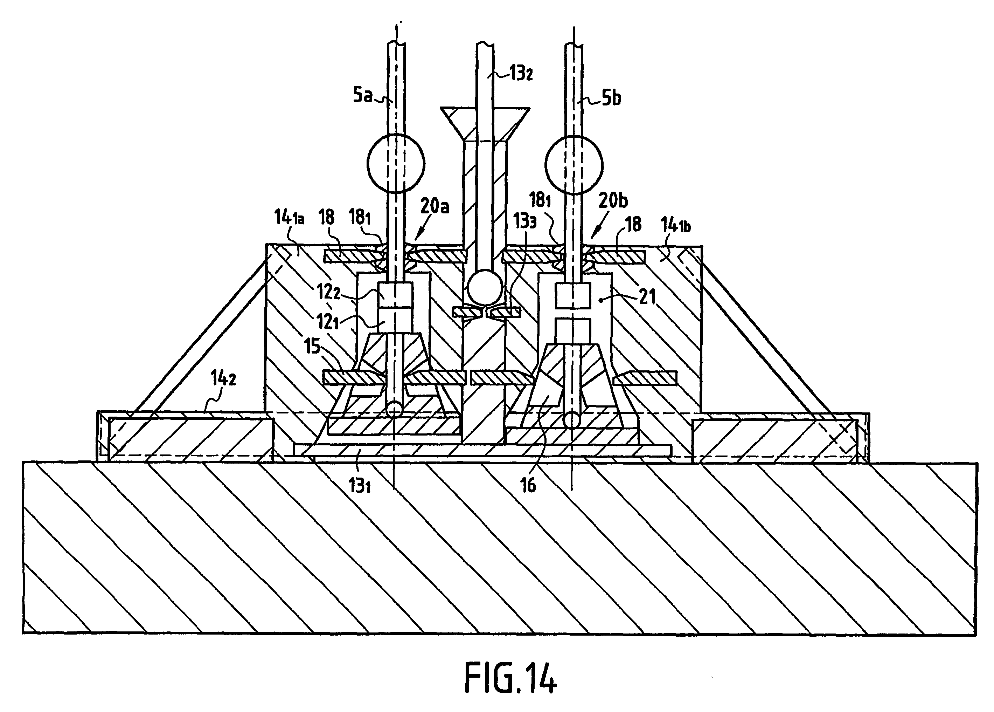

Comme représenté sur la figure 14, ledit élément central vertical 13₂ sert au guidage des risers verticaux 5a, 5b dans leur descente pour arriver au regard des orifices 20a, 20b des deux structures centrales en élévation 14₁a et 14₁b.

Dans la séquence d'installation, on réalise les étapes dans lesquelles :
1) on descend ladite deuxième plateforme 13₁,
2) on dépose lesdites structures en tabouret 13a et 13b sur ladite plateforme 13, celles-ci étant installées à l'extrémité des conduites 10 reposant au fond,
3) on descend lesdites structures centrales en élévation 14₁a et 14₁b par-dessus lesdits tabourets 13a et 13b, de manière à venir les coiffer,
4) on bloque mécaniquement lesdites structures en élévation 14₁a et 14₁b à l'aide d'un système de coins 13₃ qui coopèrent avec l'élément central vertical 13₂,
5) on descend les risers verticaux 5a, 5b le long de l'élément central vertical 13₂ de manière à arriver en regard des orifices 20a et 20b dans la partie supérieure desdites structures centrales en élévation 14₁a et 14₁b,
6) on bloque mécaniquement l'extrémité inférieure 5₁ desdits risers verticaux à l'intérieur desdits orifices 20a, 20b à l'aide d'un système de coins 18 et de deuxièmes contreformes 18₁ placées dans la portion terminale inférieure 5₁ desdits risers verticaux 5,
7) on bloque mécaniquement lesdites structures inférieures de type tabouret 13a, 13b dans lesdites cavités inférieures 21 desdites structures centrales en élévation 14₁a et 14₁b à l'aide d'un système de coins 15. Lesdites structures inférieures en tabouret 13a et 13b comprennent des premières contreformes 16 qui permettent de surélever ladite structure inférieure en tabouret 13a, lorsque les coins 15 rentrent en action pour bloquer les tabourets 13a, 13b, ce qui permet de verrouiller la première partie 12₁ d'un élément de raccordement alors au sommet de ladite structure inférieure 13a, et la partie complémentaire dudit élément de raccordement 12₂ à la portion terminale inférieure 5₁ du riser vertical 5a.

On comprend que le verrouillage de l'élément de raccordement 12₁, 12₂, par élévation de la structure inférieure 13, est rendu possible par la combinaison des caractéristiques suivantes :
1) la forme des coins 15 et des premières contreformes 16 de la structure inférieure 13 qui provoquent une distance d'élévation de ladite structure inférieure lorsque les coins 15 coopèrent avec la première contreforme, et
2) l'emplacement des deuxièmes contreformes 18₁ dans la portion terminale 5₁ du riser et les hauteurs de la cavité intérieure 21 et de la structure au tabouret 13 qui commandent un espacement initial des deux parties complémentaires 12₁, 12₂, de l'élément de raccordement, concordant avec ladite distance d'élévation.

A la figure 14, sur la partie droite du dessin, on a représenté la position de la structure inférieure 13b avant verrouillage à l'aide du système de coins 15. Et, dans la partie gauche, on a représenté la structure inférieure 13a en élévation par rapport à ladite deuxième plateforme 13₁ après verrouillage à l'aide du système de coins 15, et verrouillage du connecteur automatique 12₁, 12₂.

Dans ce mode de réalisation préféré, le blocage mécanique à l'aide du système de coins 15 de ladite structure inférieure 13 à l'intérieur de ladite cavité 21 de ladite structure supérieure 14, intervient donc après l'étape finale.

## Revendications

1. Installation de liaison fond-surface pour conduite sous-marine (10) reposant au fond de la mer, notamment à grande profondeur, comprenant :
a) au moins un riser vertical (5) relié à son extrémité inférieure à au moins une conduite sous-marine (10) reposant au fond de la mer, et à son extrémité supérieure à au moins un flotteur (6), et
b) au moins une conduite de liaison (3), de préférence une conduite flexible, assurant la liaison entre un support flottant (1) et l'extrémité supérieure (4) dudit riser vertical (5), et
c) la liaison entre l'extrémité inférieure (4) dudit riser vertical (5) et une dite conduite sous-marine (10) reposant au fond de la mer se fait par l'intermédiaire d'un système d'ancrage comprenant une embase (13-18) posée sur le fond,
**caractérisée en ce que** :
1- ledit riser vertical comprend à son extrémité inférieure une portion de conduite terminale (5₁), de préférence renforcée, reliée à la partie supérieure (5₂) dudit riser vertical par un joint flexible (19) lequel autorise des mouvements angulaires (α) de ladite partie supérieure (5₂) par rapport à ladite portion de conduite terminale (5₁) ; et
2- la partie terminale (11) de ladite conduite reposant au fond de la mer présente une courbure terminale en forme de coude, de préférence avec un grand rayon de courbure ; et
3- l'extrémité inférieure de ladite portion terminale (5₁) du riser vertical est reliée à l'extrémité supérieure de ladite courbure terminale (11) de la conduite sous-marine reposant au fond, par un unique élément de raccordement (12) entre ledit riser vertical (5) et ladite conduite sous-marine reposant au fond (10), de préférence un connecteur automatique ; et
4- ladite embase (13-18) maintient rigidement en position verticale fixe et reliées l'une à l'autre par l'intermédiaire dudit élément de raccordement (12) :
■ d'une part, ladite portion de conduite terminale (5₁) dudit riser vertical et,
■ d'autre part, ladite courbure terminale en forme de coude (11 ) de ladite conduite sous-marine reposant au fond (10), celle-ci étant tournée vers le haut ;

2. Installation selon la revendication 1, **caractérisée en ce que** ladite embase comprend :
a) une structure inférieure (13) posée sur le fond qui maintient en position verticale tournés vers le haut, ladite courbure terminale en forme de coude (11) de ladite conduite reposant au fond (10) et une première partie (12₁) d'un dit élément de raccordement (12) à l'extrémité de ladite courbure, et
b) une structure supérieure (14-18) qui assure le guidage de ladite portion terminale (5₁) dudit riser vertical (5) et qui la maintient en position verticale et qui coopère avec ladite structure inférieure (13), de sorte que ladite structure supérieure (14-18) se pose par-dessus ledit structure inférieure (13) de manière à:
■ guider une deuxième partie (12₂) dudit élément de raccordement (12) située à l'extrémité inférieure de ladite portion terminale (5₁) dudit riser vertical, en regard de ladite première partie (12₁) complémentaire de ladite deuxième partie (12₂) dudit élément de raccordement (12), et
■ stabiliser ladite une structure inférieure (13) posée sur le fond, de par le poids de ladite structure supérieure (14-18).

3. Installation selon la revendication 2, **caractérisée en ce que** ladite structure inférieure (13) est rendue solidaire de ladite structure supérieure (14-18) par un système de coins (15).

4. Installation selon la revendication 3, **caractérisée en ce que** ladite structure supérieure (14-18) comprend :
- une structure principale (14) et des éléments de stabilisation (14₃, 17₁, 17₂) qui coopèrent avec ladite structure principale (14), pour la stabiliser au sol;
- ladite structure principale (14) comprenant :
■ une structure centrale en élévation (14₁) comprenant :
. une cavité intérieure (21) ouverte à sa base et présentant une forme évasée complémentaire à la forme externe de ladite structure inférieure (13) de sorte que ladite structure centrale (14₁) coiffe ladite structure inférieure,
et
. un orifice supérieur (20) traversé par ladite portion terminale ((5₁) dudit riser vertical (5), celui-ci étant bloqué dans ledit orifice (20) par un deuxième système de coins (18), ledit orifice (20) communiquant avec ladite cavité cavité intérieure (21), et
■ une plateforme inférieure horizontale périphérique (14₂) à la base de ladite structure centrale (14₁) et avec laquelle coopèrent desdits éléments de stabilisation (17₁, 17₂).

5. Installation selon la revendication 4, **caractérisée en ce que** lesdits éléments de stabilisation comprennent des bêches (14₃) disposées dessous ladite plateforme (14₂) qui s'enfoncent verticalement dans le sol, des corps morts (17₁) posés par-dessus ladite plateforme (14₂) et des ancres à succion (17₂) posées par-dessus ladite plateforme (14₂) et la traversant pour être enfoncées dans le sol.

6. Installation selon l'une des revendications 1 à 5, **caractérisée en ce qu'**elle comprend un dispositif de liaison (4, 7) entre ledit flotteur (6) et l'extrémité supérieure dudit riser (5), comprenant :
■ une deuxième conduite souple (7) dont les extrémités sont encastrées au niveau respectivement de la sous-face dudit flotteur (6) et de l'extrémité supérieure dudit riser vertical (5),
■ la liaison de ladite deuxième conduite souple (7) à l'extrémité supérieure dudit riser (5) se faisant par l'intermédiaire d'un dispositif en forme de col de cygne (4), lequel dispositif en forme de col de cygne (4) assure aussi la liaison entre ledit riser (5) et une dite conduite de liaison (3) avec le support flottant, de préférence une dite conduite flexible (3),
■ ladite deuxième conduite souple (7) étant de préférence prolongée à travers ledit flotteur (6) par une conduite tubulaire rigide (8) traversant le flotteur de part en part, de sorte que l'on peut intervenir à l'intérieur dudit riser vertical (5) à partir de la partie supérieure du flotteur (6) à travers ladite conduite tubulaire rigide (8), puis ledit dispositif de liaison constitué de ladite deuxième conduite souple ou (7) est à travers ledit dispositif en forme de col de cygne (4), de façon à accéder à l'intérieur dudit riser (5) et le nettoyer par injection de liquide et /ou par raclage de la paroi interne dudit riser (5), puis de ladite conduite sous-marine (10) reposant au fond de la mer.

7. Installation selon l'une des revendications 1 à 6, **caractérisée en ce qu'**elle comprend :
- au moins deux dits risers verticaux (5a, 5b) sensiblement parallèles et rapprochés, chacun étant relié à son extrémité supérieure à au moins un flotteur (30a, 30b) et,
- ladite embase (13-18) maintenant en position verticale fixe et les reliant les unes aux autres par l'intermédiaire de dits éléments de raccordement (12) :
■ d'une part, deux dites portions de conduite terminale (5₁) desdits risers verticaux et,
■ d'autre part, respectivement deux dites courbures terminales en forme de coude (11) de deux dites conduites sous-marines reposant au fond (10), celles-ci étant tournées vers le haut.

8. Installation selon la revendication 7, **caractérisée en ce que** ladite embase comprend :
- au moins deux dites structures inférieures (13a, 13b) posées sur le fond, chacune maintenant en position verticale tournée vers le haut une dite courbure terminale (11) d'une dite conduite sous-marine (10) reposant au fond de la mer et une dite première partie d'un dit élément de raccordement (12) à l'extrémité de ladite courbure (11) et,
- une dite structure supérieure (14-21) qui assure le guidage des deux dites portions terminales (5₁) desdits risers verticaux (5a, 5b) et les maintient en position verticale et qui coopère avec les deux dites structures inférieures (13), de sorte que ladite structure supérieure (14-21) se pose par-dessus au moins deux dites structures inférieures (13a, 13b) côte à côte de manière à guider une dite deuxième partie (12₂) dudit élément de raccordement (12) située à l'extrémité inférieure de ladite portion terminale (5₁) de chacun desdits risers verticaux, en regard de ladite première partie (12₁)dudit élément de raccordement (12) à l'extrémité de ladite courbure (11) de chacune desdites conduites reposant au fond de la mer (10₁, 10₂) et stabiliser lesdites structures inférieures (13a, 13b) posées sur le fond, de par le poids de ladite structure supérieure (14-22).

9. Installation selon la revendication 8, **caractérisée en ce que** ladite structure supérieure comprend une structure principale (14) comprenant au moins deux dites cavités intérieures (21) chacune de forme complémentaire à la forme externe d'une dite structure inférieure (13a, 13b) et coiffant celle-ci, et au moins deux dits orifices supérieurs (20)communiquant chacun avec une dite cavité intérieure (21), chacun desdits orifices supérieurs (20) étant traversé par une dite portion terminale (5₁) desdits risers verticaux (5a, 5b), celle-ci étant bloquée dans ledit orifice supérieur (20) par un dit deuxième système de coins (18).

10. Installation selon la revendication 9, **caractérisée en ce que** ladite structure principale (14) comprend :
- au moins deux dites structures centrales en élévation (14₁a, 14₁b) coopérant avec une deuxième plateforme horizontale (13₁) sur laquelle reposent au moins les deux dites structures inférieures (13a, 13b),
- ladite deuxième plateforme (13₂) étant surmontée par un élément central vertical (13₂) qui permet :
■ le guidage desdits risers verticaux (5a, 5b) au regard desdits orifices supérieurs (20a, 20b) de chacune desdites structures centrales en élévation (14₁a, 14₁b), et
■ de préférence aussi le blocage des deux dites structures en élévation (14₁a, 14₁b) à l'aide d'un système de coins (13₃).

11. Installation selon l'une des revendications 1 à 10, **caractérisée en ce que** les deux dites conduites sous-marines (10₁, 10₂) reposant sur le fond de la mer sont assemblées en faisceau au sein d'une même enveloppe de protection souple (10₃) permettant de confiner un matériau isolant (10₄), de préférence de la paraffine, entourant lesdites conduites.

12. Installation selon l'une des revendications 1 à 11, **caractérisée en ce qu'**un premier et un deuxième risers verticaux (5a, 5b) sont maintenus sensiblement parallèles au moyen d'un système de liaison coulissant (25-27) autorisant les déplacements axiaux dudit premier riser (5a) par rapport audit deuxième riser (5b), ledit système comprenant un collier tubulaire (25) fixé autour dudit premier riser (5a), ledit collier (25) étant relié rigidement (27) à une bague tubulaire (26) coulissant librement autour dudit deuxième riser (5b), de préférence une pluralité de dits colliers (25) d'un même système de liaison (28₁) coulissant étant répartis le long de chacun desdits risers (5a, 5b) en alternance avec desdites bagues (26) d'un autre dit système de liaison (28₂) sur un même dit riser (5a, 5b).

13. Installation selon l'une des revendications 1 à 12, **caractérisée en ce qu'**elle comprend au moins un flotteur, de préférence un groupe comprenant une pluralité de flotteurs (30a, 30b) au sommet de chacun des au moins deux dits risers verticaux (5a, 5b), lesdits flotteurs (30a, 30b) étant maintenus solidaires au moyen d'une structure (33, 34, 35 et 36) les supportant et autorisant des déplacements verticaux relatifs de chacun desdits groupes de flotteurs l'un par rapport à l'autre.

14. Installation selon la revendication 13, **caractérisée en ce que** ladite structure supportant lesdits groupes de flotteurs comprend des structures articulées en forme de parallélogrammes déformables par translation verticale (33, 34a, 34b).

15. Installation selon l'une des revendications 1 à 14, **caractérisée en ce que** ledit riser vertical (5) comprend dans sa partie supérieure au-dessus dudit joint flexible (19) un système de conduites isolées constitué d'un ensemble de deux conduites coaxiales comprenant une conduite interne (5₂) et une conduite externe (5₃), un fluide ou matériau isolant (5₄) ou encore du vide étant placé de préférence entre les deux dites conduites (5₂, 5₃).

16. Procédé de mise en place d'une installation selon l'une des revendications 1 à 15, **caractérisé en ce qu'**il comprend les étapes dans lesquelles :
- on met en place sur le fond de la mer au moins une dite conduite sous-marine (10) dont la partie terminale présente une dite courbure en forme de coude (11) tournée vers le haut, et à l'extrémité de laquelle est fixée une partie mâle ou femelle d'un dit élément de raccordement (12) et
- on descend une dite embase (13-18) qui maintient en position ladite courbure en forme de coude tournée vers le haut et la stabilise au fond de la mer et,
- on descend au moins un dit riser vertical (5) à travers un orifice (20) de ladite embase (13-18), l'extrémité inférieure dudit riser comprenant une dite partie complémentaire respectivement femelle ou mâle d'un dit élément de raccordement (12), de manière à réaliser ledit raccordement entre les deux dites première et deuxième parties complémentaires dudit élément de raccordement (12), et
- on réalise le blocage (15, 18) dans ladite embase (13-18) de ladite portion terminale inférieure dudit riser (5₁) et de ladite partie terminale de conduite reposant au fond de la mer (10) présentant une dite courbure en forme de coude (11).

17. Procédé selon la revendication 16, **caractérisé en ce que** :
1- on met en place au fond de la mer au moins une dite conduite sous-marine (10) dont la partie terminale présentant une courbure en forme de coude (11) est solidaire d'une dite structure inférieure (13) de préférence préalablement installée en surface, et
2- on descend une dite structure supérieure (4) par-dessus ladite structure inférieure (13), et on bloque mécaniquement, de préférence à l'aide d'un système de coins (15) ladite structure inférieure (13) à l'intérieur de ladite cavité (21) de ladite structure supérieure (14) ;
3- on stabilise ladite structure supérieure (14) en faisant coopérer desdits éléments de stabilisation (17₁, 17₂) avec le sol par-dessus une dite plateforme (14₂) à la base de ladite structure supérieure (14) reposant sur le fond.;
4- on descend au moins un dit riser vertical (5a, 5b) à travers au moins un dit orifice supérieur (20) de ladite structure supérieure (14), puis
5- après approche des parties complémentaires dudit élément de raccordement (12) on réalise ledit raccordement, et
6- on réalise le blocage de ladite portion de conduite terminale (5₁) à l'extrémité inférieure dudit riser vertical entre ledit élément de raccordement (12) ledit joint flexible (19), dans ledit orifice supérieur (20) à l'aide d'un système de coins (18).

18. Procédé selon la revendication 17, **caractérisé en ce qu'**on réalise le blocage de ladite structure inférieure (13) à l'intérieur de ladite cavité (21), après l'étape 6.

## Patentansprüche

1. Vorrichtung zur Bildung einer Verbindung zwischen Meeresgrund und Oberfläche für eine Unterwasserleitung (10), die auf dem Meeresgrund liegt, insbesondere in großer Tiefe, welche umfaßt:
a) mindestens ein vertikales Steigrohr (5), das an seinem unteren Ende mit mindestens einer Unterwasserleitung (10), die auf dem Meeresgrund liegt, und an seinem oberen Ende mit mindestens einem Schwimmkörper (6) verbunden ist, und
b) mindestens eine Verbindungsleitung (3), vorzugsweise eine Schlauchleitung, welche die Verbindung zwischen einem schwimmenden Träger (1) und dem oberen Ende (4) des vertikalen Steigrohrs (5) gewährleistet, und
c) wobei die Verbindung zwischen dem unteren Ende (4) des vertikalen Steigrohrs (5) und einer Unterwasserleitung (10), die auf dem Meeresgrund liegt, mit Hilfe eines Verankerungssystems erfolgt, das eine Fußplatte (13-18) umfaßt, die auf dem Meeresgrund aufliegt,
**dadurch gekennzeichnet, daß**:
1 - das vertikale Steigrohr an seinem unteren Ende einen Leitungsendabschnitt (5₁), der vorzugsweise verstärkt ist, umfaßt, welcher mit dem oberen Teil (5₂) des vertikalen Steigrohrs durch eine biegsame Verbindung (19) verbunden ist, welche winkelige Bewegungen (α) des oberen Teils (5₂) in Bezug auf den Leitungsendabschnitt (5₁) erlaubt; und
2 - der Endteil (11) der Leitung, die auf dem Meeresgrund liegt, eine Endkrümmung in Knieform aufweist, vorzugsweise mit einem großen Krümmungsradius; und
3 - das untere Ende des Endabschnitts (5₁) des vertikalen Steigrohrs mit dem oberen Ende der Endkrümmung (11) der Unterwasserleitung, die auf dem Meeresgrund liegt, über ein einziges Verbindungselement (12) zwischen dem vertikalen Steigrohr (5) und der Unterwasserleitung, die auf dem Meeresgrund (10) liegt, vorzugsweise einen automatischen Verbinder, verbunden ist; und
4 - die Fußplatte (13-18) mit Hilfe des Verbindungselementes (12)
- einerseits den Leitungsendabschnitt (5₁) des vertikalen Steigrohrs und
- andererseits die Endkrümmung in Knieform (11) der auf dem Meeresboden liegenden Unterwasserleitung (10), wobei letztere nach oben gedreht ist,
starr in fester vertikaler Position und miteinander verbunden hält.

2. Vorrichtung nach Anspruch 1, **dadurch gekennzeichnet, daß** die Fußplatte umfaßt:
a) eine untere Struktur (13), die auf dem Meeresgrund angeordnet ist, welche die Endkrümmung (11) in Knieform der auf dem Meeresgrund liegenden Leitung (10) und einen ersten Teil (12₁) eines Elementes (12) zur Verbindung mit dem Ende der Krümmung in vertikaler Position nach oben gedreht hält, und
b) eine obere Struktur (14-18), welche die Führung des Endabschnitts (5₁) des vertikalen Steigrohrs (5) gewährleistet und ihn in vertikaler Position hält und welche mit der unteren Struktur (13) derart zusammenwirkt, daß die obere Struktur (14-18) sich auf die untere Struktur (13) derart setzt, daß:
- ein zweiter Teil (12₂) des Verbindungselementes (12) geführt wird, der sich am unteren Ende des Endabschnitts (5₁) des vertikalen Steigrohrs befindet, gegenüber des ersten Teils (12₁), der zum zweiten Teil (12₂) des Verbindungselementes (12) ergänzend ist, und
- die eine untere Struktur (13), die auf dem Meeresgrund liegt, durch das Gewicht der oberen Struktur (14-18) stabilisiert wird.

3. Vorrichtung nach Anspruch 2, **dadurch gekennzeichnet, daß** die untere Struktur (13) mit der oberen Struktur (14-18) mittels eines Keilsystems (15) verbunden ist.

4. Vorrichtung nach Anspruch 3, **dadurch gekennzeichnet, daß** die obere Struktur (14-18) umfaßt:
- eine Hauptstruktur (14) und Stabilisierungselemente (14₃, 17₁, 17₂), welche mit der Hauptstruktur (14) zusammenwirken, um sie auf dem Boden zu stabilisieren;
- wobei die Hauptstruktur (14) umfaßt:
- eine erhobene zentrale Struktur (14₁), die umfaßt:
- einen inneren Hohlraum (21), der an seiner Basis offen ist und eine konisch erweiterte Form aufweist, welche zur äußeren Form der unteren Struktur (13) ergänzend ist, so daß die zentrale Struktur (14₁) die untere Struktur bedeckt,
und
- eine obere Öffnung (20), die vom Endabschnitt (5₁) des vertikalen Steigrohrs (5) durchquert ist, wobei letzteres in der Öffnung (20) durch ein zweites Keilsystem (18) gesperrt ist, wobei die Öffnung (20) mit dem inneren Hohlraum (21) kommuniziert,
und
- eine untere horizontale periphere Plattform (14₂) an der Basis der zentralen Struktur (14₁) und mit welcher die Stabilisierungselemente (17₁, 17₂) zusammenwirken.

5. Vorrichtung nach Anspruch 4, **dadurch gekennzeichnet, daß** die Stabilisierungselemente Sporne (14₃), welche unterhalb der Plattform (14₂) angeordnet sind und welche vertikal in den Boden eindringen, Vertäubojen (17₁), die auf der Plattform (14₂) angeordnet sind und Sauganker (17₂), die auf der Plattform (14₂) angeordnet sind und diese durchqueren, um in den Boden eingesetzt zu werden, umfassen.

6. Vorrichtung nach einem der Ansprüche 1 bis 5, **dadurch gekennzeichnet, daß** sie eine Verbindungsvorrichtung (4, 7) zwischen dem Schwimmkörper (6) und dem oberen Ende des Steigrohrs (5) aufweist, umfassend:
- eine zweite Schlauchleitung (7), deren Enden auf der Höhe der Unterseite des Schwimmkörpers (6) bzw. des oberen Endes des vertikalen Steigrohrs (5) eingespannt sind,
- wobei die Verbindung der zweiten Schlauchleitung (7) mit dem oberen Ende des Steigrohrs (5) mit Hilfe einer Vorrichtung in Form eines Schwanenhalses (4) erfolgt, wobei die Vorrichtung in Form eines Schwanenhalses (4) auch die Verbindung zwischen dem Steigrohr (5) und einer genannten Verbindungsleitung (3) mit dem schwimmenden Träger gewährleistet, vorzugsweise einer genannten Schlauchleitung (3),
- wobei die zweite Schlauchleitung (7) vorzugsweise durch den Schwimmkörper (6) hindurch über eine starre rohrförmige Leitung (8), welche den Schwimmkörper von einer Seite zur anderen Seite durchquert, so daß in das Innere des vertikalen Steigrohrs (5) ausgehend von dem oberen Teil des Schwimmkörpers (6) durch die starre rohrförmige Leitung (8), danach durch die Verbindungsvorrichtung, die durch die zweite Schlauchleitung (7) gebildet ist, oder durch die Vorrichtung in Form eines Schwanenhalses (4) hindurch derart verlängert ist, daß das Innere des Steigrohrs (5) erreicht und durch Einspritzen von Flüssigkeit und/oder Abkratzen der Innenwand des Steigrohrs (5), danach der Unterwasserleitung (10), die auf dem Meeresgrund liegt, gereinigt wird.

7. Vorrichtung nach einem der Ansprüche 1 bis 6, **dadurch gekennzeichnet, daß** sie umfaßt:
- mindestens zwei genannte vertikale Steigrohre (5a, 5b), die im Wesentlichen parallel und einander angenähert sind, wobei jedes an seinem oberen Ende mit mindestens einem Schwimmkörper (30a, 30b) verbunden ist, und
- wobei die Fußplatte (13-18) mit Hilfe der Verbindungselemente (12)
- einerseits zwei genannte Leitungsendabschnitte (5₁) der vertikalen Steigrohre und
- andererseits jeweils zwei genannte Endkrümmungen in Knieform (11) von zwei so genannten Unterwasserleitungen (10), die auf dem Meeresgrund liegen, wobei letztere nach oben gedreht sind,
in fester vertikaler Position hält und miteinander verbindet.

8. Vorrichtung nach Anspruch 7, **dadurch gekennzeichnet, daß** die Fußplatte umfaßt:
- mindestens zwei genannte untere Strukturen (13a, 13b), die auf dem Meeresgrund angeordnet sind, wobei jede eine genannte Endkrümmung (11) einer genannten Unterwasserleitung (10), die auf dem Meeresgrund liegt und einen genannten ersten Teil eines genannten Verbindungselementes (12) mit dem Ende der Krümmung (11) in vertikaler Position nach oben gedreht hält, und
- eine genannte obere Struktur (14-21), welche die Führung der zwei genannten Endabschnitte (5₁) der vertikalen Steigrohre (5a, 5b) gewährleistet und sie in vertikaler Position hält und die mit den zwei genannten unteren Strukturen (13) derart zusammenwirkt, daß die obere Struktur (14-21) sich auf mindestens zwei genannte untere Strukturen (13a, 13b) Seite an Seite legt, um einen genannten zweiten Teil (12₂) des Verbindungselementes (12) zu führen, der am unteren Ende des Endabschnittes (5₁) von jedem der vertikalen Steigrohre angeordnet ist, gegenüber dem ersten Teil (12₁) des Verbindungselementes (12) mit dem Ende der Krümmung (11) von jeder der Leitungen (10₁, 10₂), die auf dem Meeresgrund liegen, und um die unteren Strukturen (13a, 13b), die auf dem Meeresgrund liegen, durch das Gewicht der oberen Struktur (14-22) zu stabilisieren.

9. Vorrichtung nach Anspruch 8, **dadurch gekennzeichnet, daß** die obere Struktur eine Hauptstruktur (14) umfaßt, welche mindestens zwei genannte innere Hohlräume (21) umfaßt, die jeweils eine Form aufweisen, die zur äußeren Form einer genannten unteren Struktur (13a, 13b) ergänzend ist und letztere bedeckt, und mindestens zwei genannte obere Öffnungen (20), von denen jede mit einem genannten inneren Hohlraum (21) kommuniziert, wobei jede der oberen Öffnungen (20) durch einen genannten Endabschnitt (5₁) der genannten vertikalen Steigrohre (5a, 5b) durchquert ist, wobei letzterer in der oberen Öffnung (20) durch ein genanntes zweites Keilsystem (18) gesperrt ist.

10. Vorrichtung nach Anspruch 9, **dadurch gekennzeichnet, daß** die Hauptstruktur (14) umfaßt:
- mindestens zwei genannte erhobene zentrale Strukturen (14₁a, 14₁b), die mit einer zweiten horizontalen Plattform (13₁) zusammenwirken, auf der mindestens die zwei genannten unteren Strukturen (13a, 13b) aufliegen,
- die zweite Plattform (13₂), welche durch ein zentrales vertikales Element (13₂) erhöht ist, welches Folgendes erlaubt:
- Führen der genannten vertikalen Steigrohre (5a, 5b) gegenüber den genannten oberen Öffnungen (20a, 20b) von jeder der genannten erhöhten zentralen Strukturen (14₁a, 14₁) und
- vorzugsweise auch das Sperren der zwei genannten erhöhten Strukturen (14₁a, 14₁b) mit Hilfe eines Keilsystems (13₃).

11. Vorrichtung nach einem der Ansprüche 1 bis 10, **dadurch gekennzeichnet, daß** die zwei genannten Unterwasserleitungen (10₁, 10₂), die auf dem Meeresgrund liegen, im Inneren einer gleichen biegsamen Hülle (10₃) bündelförmig zusammengefügt sind, wodurch ermöglicht wird, an ein isolierendes Material (10₄), vorzugsweise Paraffin, welches die Leitungen umgibt, zu grenzen.

12. Vorrichtung nach einem der Ansprüche 1 bis 11, **dadurch gekennzeichnet, daß** ein erstes und ein zweites vertikales Steigrohr (5a, 5b) mit Hilfe eines gleitenden Verbindungssystems (25-27) im Wesentlichen parallel gehalten werden, welches die axialen Verschiebungen des ersten Steigrohrs (5a) in Bezug auf das zweite Steigrohr (5b) erlaubt, wobei das System einen rohrförmigen Kranz (25) umfaßt, der um das erste Steigrohr (5a) herum befestigt ist, wobei der Kranz (25) starr (27) mit einem rohrförmigen Ring (26) verbunden ist, der frei um das zweite Steigrohr (5b) herum gleitet, wobei vorzugsweise eine Mehrzahl der genannten Kränze (25) eines gleichen gleitenden Verbindungssystems (28₁) entlang jedes der genannten Steigrohre (5a, 5b) in Abwechslung mit den Ringen (26) eines anderen Verbindungssystems (28₂) auf einem gleichen genannten Steigrohr (5a, 5b) verteilt sind.

13. Vorrichtung nach einem der Ansprüche 1 bis 12, **dadurch gekennzeichnet, daß** sie mindestens einen Schwimmkörper umfaßt, vorzugsweise eine Gruppe umfassend eine Mehrzahl von Schwimmkörpern (30a, 30b) auf der Spitze von jedem der mindestens zwei genannten vertikalen Steigrohre (5a, 5b), wobei die Schwimmkörper (30a, 30b) mit Hilfe einer Struktur (33, 34, 35 und 36) einstückig gehalten werden, welche sie stützt und relative vertikale Verschiebungen von jeder der Gruppen von Schwimmkörpern zueinander erlaubt.

14. Vorrichtung nach Anspruch 13, **dadurch gekennzeichnet, daß** die Struktur, welche die Gruppen von Schwimmkörpern stützt, gelenkig angeordnete Strukturen in Form von Parallelogrammen umfaßt, die durch vertikale Translation (33, 34a, 34b) verformbar sind.

15. Vorrichtung nach einem der Ansprüche 1 bis 14, **dadurch gekennzeichnet, daß** das vertikale Steigrohr (5) in ihrem oberen Teil oberhalb der biegsamen Verbindung (19) ein System von isolierten Leitungen umfaßt, das aus einer Gruppe von zwei koaxialen Leitungen besteht, welche eine innere Leitung (5₂) und eine äußere Leitung (5₃), eine isolierende Flüssigkeit oder ein isolierendes Material (5₄) oder Vakuum umfassen, vorzugsweise zwischen den zwei genannten Leitungen (5₂, 5₃) angeordnet.

16. Verfahren zum Bereitstellen einer Vorrichtung gemäß einem der Ansprüche 1 bis 15, **dadurch gekennzeichnet, daß** das Verfahren folgende Schritte umfaßt, in denen:
- auf dem Meeresgrund mindestens eine genannte Unterwasserleitung (10) bereitgestellt wird, deren Endteil eine genannte Krümmung in Form eines Knies (11) aufweist, nach oben gedreht, und an deren Ende ein männlicher oder weiblicher Teil eines genannten Verbindungselementes (12) befestigt ist und
- eine genannte Fußplatte (13-18) abgesenkt wird, welche die knieförmige Krümmung, die nach oben gedreht ist, in Position hält und sie auf dem Meeresgrund stabilisiert, und
- mindestens ein genanntes vertikales Steigrohr (5) durch eine Öffnung (20) der Fußplatte (13-18) abgesenkt wird, wobei das untere Ende des Steigrohrs einen genannten ergänzenden jeweils weiblichen oder männlichen Teil eines genannten Verbindungselementes (12) umfaßt, um die Verbindung zwischen den zwei genannten ersten und dem zweiten ergänzenden Teil des Verbindungselementes (12) herzustellen, und
- die Sperre (15, 18) in der Fußplatte (13-18) des unteren Endabschnitts des Steigrohrs (5₁) und des auf dem Meeresboden liegenden Leitungsendabschnitts (10), hergestellt wird, der eine genannte Krümmung in Knieform (11) aufweist.

17. Verfahren nach Anspruch 16, **dadurch gekennzeichnet, daß**:
1 - auf dem Meeresgrund mindestens eine genannte Unterwasserleitung (10) angeordnet wird, deren Endteil, welches eine knieförmige Krümmung (11) aufweist, mit einer genannten unteren Struktur (13) einstückig ist, die vorzugsweise zuvor an der Oberfläche installiert ist, und
2 - eine genannte obere Struktur (4) auf die untere Struktur (13) abgesenkt wird und vorzugsweise mit Hilfe eines Keilsystems (15) die untere Struktur (13) im Inneren des Hohlraums (21) der oberen Struktur (14) mechanisch gesperrt wird;
3 - die obere Struktur (14) stabilisiert wird, indem die Stabilisierungselemente (17₁, 17₂) mit dem Boden über einer genannten Plattform (14₂) an der Basis der oberen Struktur (14), die auf dem Grund ruht, zum Zusammenwirken gebracht werden;
4 - mindestens ein genanntes vertikales Steigrohr (5a, 5b) durch mindestens eine genannte obere Öffnung (20) der oberen Struktur (14) abgesenkt wird, danach
5 - nach dem Annähern der ergänzenden Teile des Verbindungselementes (12) die Verbindung hergestellt wird und
6 - die Sperre des Leitungsabschnittes (5₁) am unteren Ende des vertikalen Steigrohres zwischen dem Verbindungselement (12) und der biegsamen Verbindung (19) in der oberen Öffnung (20) mit Hilfe eines Keilsystems (18) hergestellt wird.

18. Verfahren nach Anspruch 17, **dadurch gekennzeichnet, daß** die Sperre der unteren Struktur (13) im Inneren des Hohlraums (21) nach Schritt 6 erfolgt.

## Claims

1. The bottom-to-surface connection for a sub-marine pipeline (10) resting on the sea bottom, especially at great depth, comprising:
a) at least one vertical riser (5) connected at its lower extremity to at least one sub-marine pipeline (10) resting on the sea bottom and at its upper extremity to at least one float (6), and
b) at least one linking pipeline (3), preferably a flexible pipeline, assuring the connection between a floating support (1) and the upper extremity (4) of said vertical riser (5), and
c) the connection between the lower extremity (4) of said vertical riser (5) and a so-called sub-marine pipeline (10) resting on the sea bottom is made by means of an anchoring system comprising a foot (13-18) positioned on the bottom, **characterised in that**:
1- said vertical riser comprises at its lower extremity a terminal pipe portion (5₁), preferably reinforced, connected to the upper part (5₂) of said vertical riser by a flexible joint (19) which authorizes the angular movements (α) of said upper part (5₂) relative to said terminal pipe portion (51 ); and
2- the terminal part (11) of said pipe resting on the sea bottom has a terminal bend in the form of an elbow, preferably with a large angle of curvature; and
3- the lower extremity of said terminal portion (5₁) of the vertical riser is connected to the upper extremity of said terminal bend (11) of the sub-marine pipeline resting on the sea bottom by a single connection element (12) between said vertical riser (5) and said sub-marine pipeline resting on the sea bottom (10), preferably an automatic connector, and
4- said foot (13-18) maintains rigidly in vertical fixed position and connected to each other by means of said connection element (12):
• on the one hand, said terminal pipe portion (5₁) of said vertical riser and
• on the other hand, said elbow-type terminal bend (11) of said sub-marine pipeline resting on the sea bottom (10); said bend being turned facing upwards.

2. The installation according to Claim 1, **characterised in that** said foot comprises:
a) a lower structure (13) positioned on the sea bottom that maintains in a vertical position turned upwards said elbow-type terminal bend (11) of said pipeline resting on the sea bottom (10) and a first part (12₁) of a so-called connection element (12) at the extremity of said bend, and
b) an upper structure (14-18) that assures guidance of said terminal portion (5₁) of said vertical riser (5) and that maintains it in a vertical position and that cooperates with said lower structure (13) in such a fashion that said upper structure (14-18) is positioned over said lower structure (13) so as to:
• guide a second part (12₂) of said connection element (12) situated at the lower extremity of said terminal portion (5₁) of said vertical riser opposite said first part (12₁) and complementary to said second part (12₂) of said connection element (12), and
• stabilise said one lower structure (13) positioned on the sea bottom, in virtue of the weight of said upper structure (14-18).

3. The installation according to Claim 2, **characterised in that** said lower structure (13) is secured to said upper structure (14-18) by a system of wedges (15).

4. The installation according to Claim 3, **characterised in that** said upper structure (14-18) comprises:
- a mains structure (14) and stabilization elements (14₃, 17₁, 17₂) that cooperate with said main structure (14) for stabilizing it on the sea bottom;
- said main structure (14) comprising:
. a central elevated structure (14₁) comprising:
• an interior cavity (21) open at its base and having a flared shape complementary to the external shape of said lower structure (13) such that said central structure (14₁) caps said lower structure, and
• an upper opening (20) crossed by said terminal portion (5₁) of said vertical riser (5), this latter being blocked in said opening (20) by a second system of wedges (18), said orifice (20) communicating with said interior cavity (21), and
• a lower peripheral horizontal platform (14₂) at the base of said central structure (14₁) and with which said stabilization elements (17₁, 17₂) cooperate.

5. The installation according to Claim 4, **characterised in that** said stabilization elements comprise vanes (14₃) disposed under said platform (14₂) that imbed vertically in the sea bottom, anchor blocks (17₁) positioned over said platform (14₂) and suction anchors (17₂) positioned over said platform (14₂) and passing through it in order to be imbedded in the sea bottom.

6. The installation according to one of Claims 1 to 5, **characterised in that** it comprises a connection device (4, 7) between said float (6) and the upper extremity of said riser (5), comprising:
• a second flexible pipe (7), whose extremities are enclosed at the level, respectively, of the sub-face of said float (6) and the upper extremity of said vertical riser (5);
• the connection of said second flexible pipe (7) at the upper extremity of said riser (5) forming by means of a gooseneck device (4), which gooseneck device (4) also assures the connection between said riser (5) and a so-called connection pipe (3) with the floating support, preferably a so-called flexible pipeline (3);
• said second flexible pipeline (7) being preferably prolonged across said float (6) by a rigid tubular pipe (8) traversing the float from one side to the other side, such that service can be done on the interior of said vertical riser (5) from the upper part of the float (6) through said rigid tubular pipe (8), then said connection device comprised of said second flexible pipe (7) or is across said gooseneck device (4), in such a fashion as to access the interior of said riser (5) and to clean it by injection of liquid and / or by scraping the inside wall of said riser (5), then of said sub-marine pipeline (10) resting on the sea bottom.

7. The installation according to one of Claims 1 to 6, **characterised in that** it comprises:
- at least two so-called vertical risers (5a, 5b) substantially parallel and approximated, each being connected at its upper extremity to at least one float (30a, 3b), and
- said foot (13-18) now in fixed vertical position and connecting them with each other by means of so-called connection elements (12);
• on the one hand, two so-called terminal pipe portions (5₁) of said vertical risers, and
• on the other hand, respectively, two so-called elbow-type terminal bends (11) of two so-called sub-marine pipelines resting on the sea bottom (10), these latter being turned upwards.

8. The installation according to Claim 7, **characterised in that** said foot comprises:
- at least two so-called lower structures (13a, 13b) positioned on the sea bottom, each holding in vertical position, turned facing upwards a so-called terminal bend (11) of a so-called sub-marine pipeline (10) resting on the sea bottom and one so-called first part of a so-called connection element (12) at the extremity of said bend (11), and
- a so-called upper structure (14-21) that assures guidance of the tow so-called terminal portions (5₁) of said vertical risers (5a, 5b) and holding them in a vertical position and that cooperates with the two so-called lower structures (13), in such a fashion that said upper structure (14-21) is positioned over at least two so-called lower structures (13a, 13b) side-by-side so as to guide a so-called second part (12₂) of said connection element (12) situated at the lower extremity of said terminal portion (5₁) of each of said vertical risers opposite said first part of (12₁) of said connection element (12) at the extremity of said bend (11) of each of said pipelines resting on the sea bottom (10₁, 10₂) and stabilizing said lower structures (13a, 13b) positioned on the sea bottom in virtue of the weight of said upper structure (14-22).

9. The installation according to Claim 8, **characterised in that** said upper structure comprises a main structure (14) comprising at least two so-called interior cavities (21) each complementary in shape to the outer shape of a so-called lower structure (13a, 13b) and capping same, and at least two so-called upper openings (20) each communicating with a so-called interior cavity (21), each of said upper openings (20) being crossed by a so-called terminal portion (5₁) of said vertical risers (5a, 5b), these latter being blocked in said upper opening (20) by a so-called second system of wedges (18).

10. The installation according to Claim 9, **characterised in that** said main structure (14) comprises:
- at least two so-called central structures in elevation (14₁ₐ, 14_{1b}) cooperating with a second horizontal platform (13₁) on which at least the two so-called lower structures (13a, 13b) rest;
- said second platform (13₂) being surmounted by a central vertical element (13₂) that makes possible:
• guiding of said vertical risers (5a, 5b) relative to said upper openings (20a, 20b) of each of said central structures in elevation (14₁a, 14₁b); and
• preferably also the blocking of the two so-called structures in elevation (14₁a, 14₁b) using a system of wedges (13₃).

11. The installation according to one of Claims 1 to 10, **characterised in that** the two so-called sub-marine pipelines (10₁, 10₂) resting on the sea bottom are assembled in bundle in the same flexible protective envelope (10₃) making possible confinement of an insulating material (10₄), preferably of paraffin, surrounding said pipelines.

12. The installation according to one of Claims 1 to 11, **characterised in that** a first and a second vertical riser (5a, 5b) are held substantially parallel by means of a sliding connection system (25-27) allowing axial displacement of said first riser (5a) relative to said second riser (5b), said system comprising a tubular collar (25) fixed around said first riser (5a), said collar (25) being rigidly connected (27) to a tubular ring (26) freely sliding around said second riser (5b), preferably a plurality of said collars (25) of a same sliding connection system (28₁) being disposed over the length of each of said risers (5a, 5b) altematingly with said rings (26) of another so-called connection system (28₂) on a same so-called riser (5a, 5b).

13. The installation according to one of Claims 1 to 12, **characterised in that** it comprises at least one float, preferably a group comprising a plurality of floats (30a, 30b) at the top of each of the at least two so-called vertical risers (5a, 5b), said floats (30a, 30b) being secured by means of a structure (33, 34, 35 and 36) supporting them and allowing vertical displacements relative to each of said groups of floats relative to each other.

14. The installation according to Claim 13, **characterised in that** said structure supporting said groups of floats comprises articulated structures in the form of deformable parallelograms by vertical translation (33, 34a, 34b).

15. The installation according to one of Claims 1 to 14, **characterised in that** said vertical riser (5) comprises in its upper part over said flexible joint (19) a system of insulated pipes comprised of an assembly of two coaxial pipes comprising an internal pipe (5₂) and an external pipe (5₃), an insulating fluid or material (5₄) or even a vacuum being placed preferably between the two so-called pipes (5₂, 5₃).

16. A method of placing an installation according to one of Claims 1 to 15, **characterised in that** it comprises the steps, in which:
- at least one so-called sub-marine pipeline (10) is installed on the sea bottom, whose terminal part has a so-called elbow-type bend (11) turned upwards and at the extremity of which a male or female part of a so-called connection element (12) is affixed, and
- a so-called foot (13-18) is lowered that maintains said elbow-type bend turned upwards in position and stabilizes it on the sea bottom, and
- at least one vertical riser (5) is lowered through an opening (20) of said foot (13-18), the lower extremity of said riser comprising a so-called complementary part, respectively, male or female of a so-called connection element (12) so as to realize said connection between the two so-called first and second complementary parts of said connection element (12), and
- the blockage (15, 18) in said foot (13-18) of said lower terminal portion of said riser (5₁) is realized and of said terminal part of the pipeline resting on the sea bottom (10) having a so-called elbow-type bend (11).

17. The process according to Claim 16, **characterised in that**:
1- at least one so-called sub-marine pipeline (10) is installed on the sea floor, the terminal part of which having an elbow-type bend (11) is secured by a so-called lower structure (13) that is preferably previously installed at the surface, and
2- a so-called upper structure (4) is lowered over said lower structure (13) and mechanically blocked, preferably using a system of wedges (15), said lower structure (13) at the interior of said cavity (21) of said upper structure (14);
3- said upper structure (14) is stabilized by cooperation of said stabilization elements (17₁, 17₂) using the floor above a so-called platform (14₂) at the base of said upper structure (14) resting on the sea bottom;
4- at least one so-called vertical riser (5a, 5b) is lowered through at least one so-called upper opening (20) of said upper structure (14), then
5- after approximation of the complementary parts of said connection element (12) said connection is realized, and
6- blockage of said portion of the terminal pipe portion (5₁) at the lower extremity of said vertical riser between said connection element (12) and said flexible joint (19), in said upper opening (20) using a system of wedges (18).

18. The method according to Claim 17, **characterised in that** the blockage of said lower structure (13) at the interior of said cavity (21) is done after step 6.
